# EUROPEAN PATENT SPECIFICATION

(11) **EP 4 096 202 B1**
(45) Date of publication and mention of the grant of the patent: **25.06.2025**
(21) Application number: 21760045.1
(22) Date of filing: 26.02.2021
(51) Int. Cl.: H04M 1/02

(54) **WIRELESS SOUND AMPLIFICATION SYSTEM AND TERMINAL**
DRAHTLOSES SCHALLVERSTÄRKERSYSTEM UND ENDGERÄT
SYSTÈME D'AMPLIFICATION DE SON SANS FIL ET TERMINAL

(30) Priority: 28.02.2020 CN 202010131051
(43) Date of publication of application: 30.11.2022
(73) Proprietor: Huawei Technologies Co., Ltd., Shenzhen, Guangdong 518129, (CN)
(72) Inventor: FENG, Jianting, Shenzhen, Guangdong 518129 (CN); YANG, Xiao, Shenzhen, Guangdong 518129 (CN); SHENG, Xing, Shenzhen, Guangdong 518129 (CN); HONG, Runqi, Shenzhen, Guangdong 518129 (CN)
(74) Representative: Isarpatent
(86) International application number: PCT/CN2021/078028
(87) International publication number: WO 2021/170061

(56) References cited:
- CN-A- 102 026 058
- CN-A- 103 268 766
- CN-A- 106 357 871
- CN-A- 108 271 111
- CN-Y- 201 345 681
- US-A1- 2012 123 772

## Description

### TECHNICAL FIELD

Embodiments of this application relate to the communication field, and in particular, to a wireless sound amplification system and a terminal.

### BACKGROUND

In daily life, people often encounter a scenario in which sound amplification needs to be performed, for example, a noisy scenario, a conference scenario, or a class scenario.

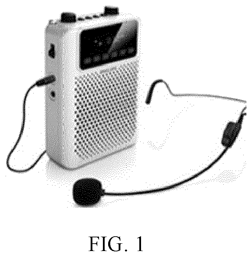

Currently, a sound amplification solution in a current technology is generally as follows: a user carries a sound amplification device, and the sound amplification device includes a microphone and an acoustic device, as shown in FIG. 1. However, in some occasional scenarios, for example, a conference scenario, it is not convenient for a user who occasionally has a sound amplification requirement to carry a sound amplification device.

CN 106 357 871 A discloses a voice amplifying method and a mobile terminal.

CN 108 271 111 A discloses an intelligent sound amplifying method and a system.

CN 201 345 681 Y discloses a terminal with the sound amplifying function.

### SUMMARY

This application provides a wireless sound amplification system, and a terminal, as defined in the appended set of claims, to effectively reduce a sound amplification delay and make carrying convenient.

To achieve the foregoing objective, the following technical solutions are used in this application.

According to a first aspect, an embodiment of this application provides a wireless sound amplification system, where the system includes a terminal and a sound amplification device, the terminal is wirelessly connected to the sound amplification device, and the terminal includes an audio module, a first microphone, and a second microphone. Specifically, the first microphone is configured to: collect a corresponding first voice signal when a user speaks, and transmit the first voice signal to the audio module; and the second microphone is configured to: collect a corresponding second voice signal when the user speaks, and transmit the second voice signal to the audio module. It may be understood as follows: Both the first microphone and the second microphone collect a human voice of the user. However, because distances between the first microphone and the user and between the second microphone and the user are different, voice signals collected by the first microphone and the second microphone are different. The audio module is configured to: process the first voice signal and the second voice signal in response to the obtained first voice signal and the obtained second voice signal, to obtain a playback voice signal; and transmit the obtained playback voice signal to the sound amplification device. The sound amplification device is configured to perform sound amplification on the playback voice signal in response to the obtained playback voice signal.

Based on the foregoing manner, the collected voice signal can be processed by the terminal at a processor layer, that is, processed by the audio module, to implement a low-delay loopback path, and reduce impact of a sound amplification delay on a sound amplification effect. In addition, the user can implement human voice amplification only by using a mobile phone and a sound amplification device, so that a portable sound amplification system is provided, and the user can implement sound amplification by connecting the mobile phone to the sound amplification device in scenarios such as a conference scenario, a live broadcast scenario, and a class scenario.

In a possible implementation, the audio module includes an audio analog-to-digital processing module and an audio digital signal processing module. Specifically, the audio analog-to-digital processing module is configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; and transmit the first digital voice signal and the second digital voice signal to the audio digital signal processing module, where the first voice signal and the second voice signal are analog signals. The audio digital signal processing module is configured to: in response to the obtained first digital voice signal and the obtained second digital voice signal, perform sound effect processing on the first digital voice signal and the second digital voice signal based on a preset sound amplification algorithm, to obtain a third digital voice signal; perform audio mixing processing on the third digital voice signal to obtain the playback voice signal; and transmit the playback voice signal to the audio analog-to-digital processing module. The audio analog-to-digital processing module is further configured to transmit the obtained playback voice signal to the sound amplification device.

Based on the foregoing manner, the collected voice signal can be processed at a hardware layer of the terminal, that is, inside an audio module in a processor, to implement a low-delay loopback manner, and reduce impact of a sound amplification delay on a sound amplification effect.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering, to obtain a third digital voice signal, where signal strength of the first voice signal is greater than signal strength of the second voice signal.

Based on the foregoing manner, anti-howling processing in a sound amplification process is implemented. The voice signal collected by the second microphone is filtered out from the voice signal collected by the first microphone, to obtain a voice signal corresponding to a human voice of a user, so that accuracy of filtering out an interference signal is improved.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

Based on the foregoing manner, anti-proximity-effect processing in a sound amplification process is implemented. The interference signal in the voice signal collected by the first microphone is filtered out by using the voice signal collected by the second microphone, to eliminate a proximity effect.

According to a second aspect, embodiments of this application provide a wireless sound amplification system. The system includes a headset and a terminal. The headset is wiredly or wirelessly connected to a sound amplification device, the terminal includes an audio module and a speaker, and the headset includes a first microphone and a second microphone. The first microphone is configured to: collect a first voice signal and transmit the first voice signal to the audio module. The second microphone is configured to: collect a second voice signal and transmit the second voice signal to the audio module. The audio module is configured to: process the first voice signal and the second voice signal in response to the obtained first voice signal and the obtained second voice signal, to obtain a playback voice signal; and transmit the playback voice signal to the speaker. The speaker is configured to perform sound amplification on the playback voice signal in response to the obtained playback voice signal.

Based on the foregoing manner, the collected voice signal can be processed by the terminal at a processor layer, that is, processed by the audio module, to implement a low-delay loopback path, and reduce impact of a sound amplification delay on a sound amplification effect. In addition, a user can implement human voice amplification only by connecting a mobile phone to a headset, so that a portable sound amplification system is provided, and the user can implement sound amplification by using the headset and the mobile phone in scenarios such as a conference, live broadcast, and a class.

In a possible implementation, the audio module includes an audio analog-to-digital processing module and an audio digital signal processing module. The audio analog-to-digital processing module is configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; and transmit the first digital voice signal and the second digital voice signal to the audio digital signal processing module, where the first voice signal and the second voice signal are analog signals. The audio digital signal processing module is configured to: in response to the obtained first digital voice signal and the obtained second digital voice signal, perform sound effect processing on the first digital voice signal and the second digital voice signal based on a preset sound amplification algorithm, to obtain a third digital voice signal; perform audio mixing processing on the third digital voice signal to obtain a fourth digital voice signal; and transmit the fourth digital voice signal to the audio analog-to-digital processing module. The audio analog-to-digital processing module is further configured to: perform analog-to-digital conversion on the fourth digital voice signal in response to the obtained fourth digital voice signal, to obtain the playback voice signal; and transmit the playback voice signal to the speaker, where the playback voice signal is an analog signal.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering, to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a third aspect, embodiments of this application provide a wireless sound amplification system. The system includes a headset, a mobile phone, and a sound amplification device. The headset is wiredly or wirelessly connected to the sound amplification device, the mobile phone is wirelessly connected to the sound amplification device, the terminal includes an audio module, and the headset includes a first microphone and a second microphone. The first microphone is configured to: collect a first voice signal and transmit the first voice signal to the audio module. The second microphone is configured to: collect a second voice signal and transmit the second voice signal to the audio module. The audio module is configured to: process the first voice signal and the second voice signal in response to the obtained first voice signal and the obtained second voice signal, to obtain a playback voice signal; and transmit the playback voice signal to the sound amplification device. The sound amplification device is configured to perform sound amplification on the playback voice signal in response to the obtained playback voice signal.

Based on the foregoing manner, the collected voice signal can be processed by the terminal at a processor layer, that is, processed by the audio module, to implement a low-delay loopback path, and reduce impact of a sound amplification delay on a sound amplification effect. In addition, a user can implement human voice amplification only by connecting a mobile phone to a headset, so that a portable sound amplification system is provided, and the user can implement sound amplification by using the headset and the mobile phone in scenarios such as a conference, live broadcast, and a class.

In a possible implementation, the audio module includes an audio analog-to-digital processing module and an audio digital signal processing module. The audio analog-to-digital processing module is configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; and transmit the first digital voice signal and the second digital voice signal to the audio digital signal processing module, where the first voice signal and the second voice signal are analog signals. The audio digital signal processing module is configured to: in response to the obtained first digital voice signal and the obtained second digital voice signal, perform sound effect processing on the first digital voice signal and the second digital voice signal based on a preset sound amplification algorithm, to obtain a third digital voice signal; perform audio mixing processing on the third digital voice signal to obtain the playback voice signal; and transmit the playback voice signal to the audio analog-to-digital processing module. The audio analog-to-digital processing module is further configured to transmit the obtained playback voice signal to the sound amplification device.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a fourth aspect, an embodiment of this application provides a terminal. The terminal includes an audio module and a pickup device. The pickup device is configured to: collect a voice signal and transmit the voice signal to the audio module. The audio module is configured to: process the voice signal in response to the obtained voice signal, to obtain a playback voice signal; and transmit the playback voice signal to a sound amplification device.

Based on the foregoing manner, the collected voice signal can be processed by the terminal at a processor layer, that is, processed by the audio module, to implement a low-delay loopback path, and reduce impact of a sound amplification delay on a sound amplification effect. In addition, a user can implement human voice amplification only by connecting a mobile phone to a headset, so that a portable sound amplification system is provided, and the user can implement sound amplification by using the headset and the mobile phone in scenarios such as a conference, live broadcast, and a class.

In a possible implementation, the pickup device is a microphone on a headset that is wiredly or wirelessly connected to the terminal, and includes a first microphone and a second microphone.

In a possible implementation, the pickup device is a microphone of the terminal, and includes a first microphone and a second microphone.

In a possible implementation, the voice signal includes a first voice signal and a second voice signal. The first microphone is configured to: collect the first voice signal and transmit the first voice signal to the audio module. The second microphone is configured to: collect the second voice signal and transmit the second voice signal to the audio module. The first voice signal and the second voice signal are voice signals. The audio module is configured to: process the first voice signal and the second voice signal in response to the obtained first voice signal and second voice signal, to obtain the playback voice signal; and transmit the playback voice signal to the sound amplification device.

In a possible implementation, the sound amplification device is a speaker of the terminal, and the audio module includes an audio analog-to-digital processing module and an audio digital signal processing module. The audio analog-to-digital processing module is configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; and transmit the first digital voice signal and the second digital voice signal to the audio digital signal processing module, where the first voice signal and the second voice signal are analog signals. The audio digital signal processing module is configured to: in response to the obtained first digital voice signal and the obtained second digital voice signal, perform sound effect processing on the first digital voice signal and the second digital voice signal based on a preset sound amplification algorithm, to obtain a third digital voice signal; perform audio mixing processing on the third digital voice signal to obtain a fourth digital voice signal; and transmit the fourth digital voice signal to the audio analog-to-digital processing module. The audio analog-to-digital processing module is further configured to: perform analog-to-digital conversion on the fourth digital voice signal in response to the obtained fourth digital voice signal, to obtain the playback voice signal; and transmit the playback voice signal to the speaker, where the playback voice signal is an analog signal.

In a possible implementation, the sound amplification device is a sound amplification device wirelessly connected to the terminal. The audio analog-to-digital processing module is configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; and transmit the first digital voice signal and the second digital voice signal to the audio digital signal processing module, where the first voice signal and the second voice signal are analog signals. The audio digital signal processing module is configured to: in response to the obtained first digital voice signal and the obtained second digital voice signal, perform sound effect processing on the first digital voice signal and the second digital voice signal based on a preset sound amplification algorithm, to obtain a third digital voice signal; perform audio mixing processing on the third digital voice signal to obtain the playback voice signal; and transmit the playback voice signal to the audio analog-to-digital processing module. The audio analog-to-digital processing module is further configured to transmit the obtained playback voice signal to the sound amplification device.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a fifth aspect, an embodiment of this application provides a wireless sound amplification method, where the method is applied to a terminal, and includes: obtaining a first voice signal collected by a first microphone of the terminal and a second voice signal collected by a second microphone; processing the first voice signal and the second voice signal in response to the obtained first voice signal and second voice signal, to obtain a playback voice signal; and transmitting the playback voice signal to a sound amplification device, where the sound amplification device is an external device wirelessly connected to the terminal.

In a possible implementation, the processing the first voice signal and the second voice signal includes: in response to the obtained first voice signal and the obtained second voice signal, performing analog-to-digital conversion on the first voice signal to obtain a first digital voice signal, and performing analog-to-digital conversion on the second voice signal to obtain a second digital voice signal; transmitting the first digital voice signal and the second digital voice signal to the audio digital signal processing module, where the first voice signal and the second voice signal are analog signals; performing sound effect processing on the first digital voice signal and the second digital voice signal based on a preset sound amplification algorithm, to obtain a third digital voice signal; performing audio mixing processing on the third digital voice signal to obtain the playback voice signal; and transmitting the obtained play digital voice signal to the sound amplification device.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a sixth aspect, an embodiment of this application provides a wireless sound amplification method, where the method is applied to a terminal, and includes: obtaining a first voice signal collected by a first microphone of a headset and a second voice signal collected by a second microphone of the headset, where the headset is wiredly or wirelessly connected to the terminal; processing the first voice signal and the second voice signal in response to the obtained first voice signal and the obtained second voice signal, to obtain a playback voice signal; and performing sound amplification on the playback voice signal by using a speaker.

In a possible implementation, the processing the first voice signal and the second voice signal includes: in response to the obtained first voice signal and the obtained second voice signal, performing analog-to-digital conversion on the first voice signal to obtain a first digital voice signal, and performing analog-to-digital conversion on the second voice signal to obtain a second digital voice signal, where the first voice signal and the second voice signal are analog signals; performing sound effect processing on the first digital voice signal and the second digital voice signal based on a preset sound amplification algorithm, to obtain a third digital voice signal; performing audio mixing processing on the third digital voice signal to obtain a fourth digital voice signal; and performing analog-to-digital conversion on the fourth digital voice signal to obtain the playback voice signal.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a seventh aspect, an embodiment of this application provides a wireless sound amplification method, where the method is applied to a terminal, and includes: obtaining a first voice signal collected by a first microphone of a headset and a second voice signal collected by a second microphone of the headset, where the headset is wiredly or wirelessly connected to the terminal; processing the first voice signal and the second voice signal in response to the obtained first voice signal and second voice signal, to obtain a playback voice signal; and transmitting the playback voice signal to a sound amplification device, where the sound amplification device is an external device wirelessly connected to the terminal.

In a possible implementation, the processing the first voice signal and the second voice signal includes: in response to the obtained first voice signal and the obtained second voice signal, performing analog-to-digital conversion on the first voice signal to obtain a first digital voice signal, and performing analog-to-digital conversion on the second voice signal to obtain a second digital voice signal; transmitting the first digital voice signal and the second digital voice signal to the audio digital signal processing module, where the first voice signal and the second voice signal are analog signals; performing sound effect processing on the first digital voice signal and the second digital voice signal based on a preset sound amplification algorithm, to obtain a third digital voice signal; performing audio mixing processing on the third digital voice signal to obtain the playback voice signal; and transmitting the obtained play digital voice signal to the sound amplification device.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to an eighth aspect, an embodiment of this application provides a wireless sound amplification method, where the method is applied to a terminal, and includes: collecting a voice signal; processing the voice signal in response to the obtained voice signal, to obtain a playback voice signal; and transmitting the playback voice signal to a sound amplification device.

In a possible implementation, the pickup device is a microphone on a headset that is wiredly or wirelessly connected to the terminal, and includes a first microphone and a second microphone.

In a possible implementation, the pickup device is a microphone of the terminal, and includes a first microphone and a second microphone.

In a possible implementation, the voice signal includes a first voice signal and a second voice signal. The collecting a voice signal includes: collecting the first voice signal by using the first microphone, and collecting the second voice signal by using the second microphone; processing the first voice signal and the second voice signal in response to the obtained first voice signal and the obtained second voice signal, to obtain the playback voice signal; and transmitting the playback voice signal to the sound amplification device.

In a possible implementation, the sound amplification device is a speaker of the terminal, and the processing the first voice signal and the second voice signal includes: in response to the obtained first voice signal and the obtained second voice signal, performing analog-to-digital conversion on the first voice signal to obtain a first digital voice signal, and performing analog-to-digital conversion on the second voice signal to obtain a second digital voice signal, where the first voice signal and the second voice signal are analog signals; performing sound effect processing on the first digital voice signal and the second digital voice signal based on a preset sound amplification algorithm, to obtain a third digital voice signal; performing audio mixing processing on the third digital voice signal to obtain a fourth digital voice signal; and performing analog-to-digital conversion on the fourth digital voice signal to obtain the playback voice signal.

In a possible implementation, the sound amplification device is a sound amplification device wirelessly connected to the terminal, and the processing the first voice signal and the second voice signal includes: in response to the obtained first voice signal and the obtained second voice signal, performing analog-to-digital conversion on the first voice signal to obtain a first digital voice signal, and performing analog-to-digital conversion on the second voice signal to obtain a second digital voice signal; transmitting the first digital voice signal and the second digital voice signal to the audio digital signal processing module, where the first voice signal and the second voice signal are analog signals; performing sound effect processing on the first digital voice signal and the second digital voice signal based on a preset sound amplification algorithm, to obtain a third digital voice signal; performing audio mixing processing on the third digital voice signal to obtain the playback voice signal; and transmitting the obtained play digital voice signal to the sound amplification device.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a ninth aspect, an embodiment of this application provides a terminal, including an obtaining module, a processing module, and a sending module. Specifically, the obtaining module is configured to obtain a first voice signal collected by a first microphone of the terminal and a second voice signal collected by a second microphone. The processing module is configured to process the first voice signal and the second voice signal in response to the obtained first voice signal and the obtained second voice signal, to obtain a playback voice signal. The sending module is configured to transmit the playback voice signal to a sound amplification device, where the sound amplification device is an external device wirelessly connected to the terminal.

In a possible implementation, the processing module is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; transmit the first digital voice signal and the second digital voice signal to the audio digital signal processing module, where the first voice signal and the second voice signal are analog signals; perform sound effect processing on the first digital voice signal and the second digital voice signal based on a preset sound amplification algorithm, to obtain a third digital voice signal; perform audio mixing processing on the third digital voice signal to obtain the playback voice signal; and transmit the obtained play digital voice signal to the sound amplification device.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a tenth aspect, an embodiment of this application provides a terminal, including an obtaining module, a processing module, and a speaker module. Specifically, the obtaining module is configured to obtain a first voice signal collected by a first microphone of a headset and a second voice signal collected by a second microphone of the headset, where the headset is wiredly or wirelessly connected to the terminal. The processing module is configured to process the first voice signal and the second voice signal in response to the obtained first voice signal and the obtained second voice signal, to obtain a playback voice signal. The speaker module is configured to perform sound amplification on the playback voice signal.

In a possible implementation, the processing module is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal, where the first voice signal and the second voice signal are analog signals; perform sound effect processing on the first digital voice signal and the second digital voice signal based on a preset sound amplification algorithm, to obtain a third digital voice signal; perform audio mixing processing on the third digital voice signal to obtain a fourth digital voice signal; and perform analog-to-digital conversion on the fourth digital voice signal to obtain the playback voice signal.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to an eleventh aspect, an embodiment of this application provides a terminal, including an obtaining module, a processing module, and a sending module. Specifically, the obtaining module is configured to obtain a first voice signal collected by a first microphone of a headset and a second voice signal collected by a second microphone of the headset, where the headset is wiredly or wirelessly connected to the terminal. The processing module is configured to process the first voice signal and the second voice signal in response to the obtained first voice signal and the obtained second voice signal, to obtain a playback voice signal. The sending module is configured to transmit the playback voice signal to a sound amplification device, where the sound amplification device is an external device wirelessly connected to the terminal.

In a possible implementation, the processing module is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; transmit the first digital voice signal and the second digital voice signal to the audio digital signal processing module, where the first voice signal and the second voice signal are analog signals; perform sound effect processing on the first digital voice signal and the second digital voice signal based on a preset sound amplification algorithm, to obtain a third digital voice signal; perform audio mixing processing on the third digital voice signal to obtain the playback voice signal; and transmit the obtained play digital voice signal to the sound amplification device.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a twelfth aspect, an embodiment of this application provides a terminal, including an obtaining module, a processing module, and a sending module. Specifically, the obtaining module is configured to collect a voice signal; the processing module is configured to process the voice signal in response to the obtained voice signal, to obtain a playback voice signal; and the sending module is configured to transmit the playback voice signal to a sound amplification device.

In a possible implementation, the pickup device is a microphone on a headset that is wiredly or wirelessly connected to the terminal, and includes a first microphone and a second microphone.

In a possible implementation, the pickup device is a microphone of the terminal, and includes a first microphone and a second microphone.

In a possible implementation, the voice signal includes a first voice signal and a second voice signal. The obtaining module is configured to: collect the first voice signal by using the first microphone, and collect the second voice signal by using the second microphone. The processing module is configured to: process the first voice signal and the second voice signal in response to the obtained first voice signal and the obtained second voice signal, to obtain the playback voice signal; and transmit the playback voice signal to the sound amplification device.

In a possible implementation, the sound amplification device is a speaker of the terminal, and the processing module is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal, where the first voice signal and the second voice signal are analog signals; perform sound effect processing on the first digital voice signal and the second digital voice signal based on a preset sound amplification algorithm, to obtain a third digital voice signal; perform audio mixing processing on the third digital voice signal to obtain a fourth digital voice signal; and perform analog-to-digital conversion on the fourth digital voice signal to obtain the playback voice signal.

In a possible implementation, the sound amplification device is a sound amplification device wirelessly connected to the terminal, and the processing module is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; transmit the first digital voice signal and the second digital voice signal to the audio digital signal processing module, where the first voice signal and the second voice signal are analog signals; perform sound effect processing on the first digital voice signal and the second digital voice signal based on a preset sound amplification algorithm, to obtain a third digital voice signal; perform audio mixing processing on the third digital voice signal to obtain the playback voice signal; and transmit the obtained play digital voice signal to the sound amplification device.

In a possible implementation, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

In a possible implementation, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

According to a thirteenth aspect, an embodiment of this application provides a computer-readable medium, configured to store a computer program, where the computer program includes instructions used to perform the method in the fifth aspect or any possible implementation of the fifth aspect.

According to a fourteenth aspect, an embodiment of this application provides a computer-readable medium, configured to store a computer program, where the computer program includes instructions used to perform the method in the sixth aspect or any possible implementation of the sixth aspect.

According to a fifteenth aspect, an embodiment of this application provides a computer-readable medium, configured to store a computer program, where the computer program includes instructions used to perform the method in the seventh aspect or any possible implementation of the seventh aspect.

According to a sixteenth aspect, an embodiment of this application provides a computer-readable medium, configured to store a computer program, where the computer program includes instructions used to perform the method in the eighth aspect or any possible implementation of the eighth aspect.

According to a seventeenth aspect, an embodiment of this application provides a computer program, where the computer program includes instructions used to perform the method in the fifth aspect or any possible implementation of the fifth aspect.

According to an eighteenth aspect, an embodiment of this application provides a computer program, where the computer program includes instructions used to perform the method in the sixth aspect or any possible implementation of the sixth aspect.

According to a nineteenth aspect, an embodiment of this application provides a computer program, where the computer program includes instructions used to perform the method in the seventh aspect or any possible implementation of the seventh aspect.

According to a twelfth aspect, an embodiment of this application provides a computer program, where the computer program includes instructions used to perform the method in the eighth aspect or any possible implementation of the eighth aspect.

According to a twenty-first aspect, an embodiment of this application provides a chip, where the chip includes a processing circuit and a transceiver pin. The transceiver pin and the processing circuit communicate with each other by using an internal connection path. The processing circuit performs the method in the fifth aspect or any possible implementation of the fifth aspect, to control a receive pin to receive a signal and control a transmit pin to send a signal.

According to a twenty-second aspect, an embodiment of this application provides a chip, where the chip includes a processing circuit and a transceiver pin. The transceiver pin and the processing circuit communicate with each other by using an internal connection path. The processing circuit performs the method in the sixth aspect or any possible implementation of the sixth aspect, to control a receive pin to receive a signal and control a transmit pin to send a signal.

According to a twenty-third aspect, an embodiment of this application provides a chip, where the chip includes a processing circuit and a transceiver pin. The transceiver pin and the processing circuit communicate with each other by using an internal connection path. The processing circuit performs the method in the seventh aspect or any possible implementation of the seventh aspect, to control a receive pin to receive a signal and control a transmit pin to send a signal.

According to a twenty-fourth aspect, an embodiment of this application provides a chip, where the chip includes a processing circuit and a transceiver pin. The transceiver pin and the processing circuit communicate with each other by using an internal connection path. The processing circuit performs the method in the eighth aspect or any possible implementation of the eighth aspect, to control a receive pin to receive a signal and control a transmit pin to send a signal.

### BRIEF DESCRIPTION OF DRAWINGS

To describe the technical solutions in embodiments of this application more clearly, the following briefly describes the accompanying drawings required for describing embodiments of this application. It is clear that the accompanying drawings in the following description show merely some embodiments of this application, and for a person of ordinary skill in the art, other drawings may be obtained according to these drawings without creative efforts.
FIG. 1 is an example of a schematic diagram of a sound amplification device;
FIG. 2 is an example of a schematic diagram of a structure of a terminal;
FIG. 3a is an example of one schematic diagram of a wireless sound amplification function interface;
FIG. 3b is an example of one schematic diagram of a wireless sound amplification function interface;
FIG. 4 is an example of one schematic diagram of an application scenario;
FIG. 5 is one schematic flowchart of a wireless sound amplification method according to an embodiment of this application;
FIG. 6 is an example of one schematic diagram of an internal processing procedure of a mobile phone;
FIG. 7 is an example of one schematic diagram of an application scenario;
FIG. 8 is one schematic flowchart of a wireless sound amplification method according to an embodiment of this application;
FIG. 9 is an example of one schematic diagram of an internal processing procedure of a mobile phone;
FIG. 10 is an example of a schematic diagram of an echo generation principle;
FIG. 11 is an example of a schematic diagram of a principle of an anti-howling algorithm;
FIG. 12 is a schematic flowchart of an anti-howling algorithm according to an embodiment of this application;
FIG. 13 is a schematic flowchart of an anti-proximity-effect algorithm according to an embodiment of this application;
FIG. 14 is an example of one schematic diagram of an application scenario;
FIG. 15 is one schematic flowchart of a wireless sound amplification method according to an embodiment of this application;
FIG. 16 is an example of one schematic diagram of an internal processing procedure of a mobile phone;
FIG. 17 is a schematic flowchart of an anti-howling algorithm according to an embodiment of this application;
FIG. 18 is an example of one schematic diagram of an application scenario;
FIG. 19 is one schematic flowchart of a wireless sound amplification method according to an embodiment of this application;
FIG. 20 is an example of one schematic diagram of an internal processing procedure of a mobile phone;
FIG. 21 is an example of one schematic diagram of an application scenario;
FIG. 22 is one schematic flowchart of a wireless sound amplification method according to an embodiment of this application;
FIG. 23 is an example of one schematic diagram of an application scenario;
FIG. 24 is a schematic diagram of a structure of a terminal according to an embodiment of this application;
FIG. 25 is a schematic diagram of a structure of a terminal according to an embodiment of this application;
FIG. 26 is a schematic diagram of a structure of a terminal according to an embodiment of this application;
FIG. 27 is a schematic diagram of a structure of a terminal according to an embodiment of this application; and
FIG. 28 is a schematic diagram of a structure of a terminal according to an embodiment of this application.

### DESCRIPTION OF EMBODIMENTS

The following clearly and completely describes the technical solutions in embodiments of this application with reference to the accompanying drawings in embodiments of this application. Clearly, the described embodiments are some but not all of embodiments of this application.

The term "and/or" in this specification merely describes an association relationship between associated objects and represents that three relationships may exist. For example, A and/or B may represent the following three cases: Only A exists, both A and B exist, and only B exists.

In the specification and claims of embodiments of this application, the terms "first", "second", and the like are intended to distinguish between different objects, but do not indicate a particular order of the objects. For example, a first target object, a second target object, and the like are intended to distinguish between different target objects, but do not indicate a particular order of the target objects.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In the descriptions of embodiments of this application, unless otherwise stated, "a plurality of" means at least two. For example, a plurality of processing units refer to two or more processing units, and a plurality of systems refer to two or more systems.

Specifically, the terminal in this application may be a terminal device configured with a microphone, such as a mobile phone, a smartphone, a notebook computer, or a tablet computer (personal computer, PC).

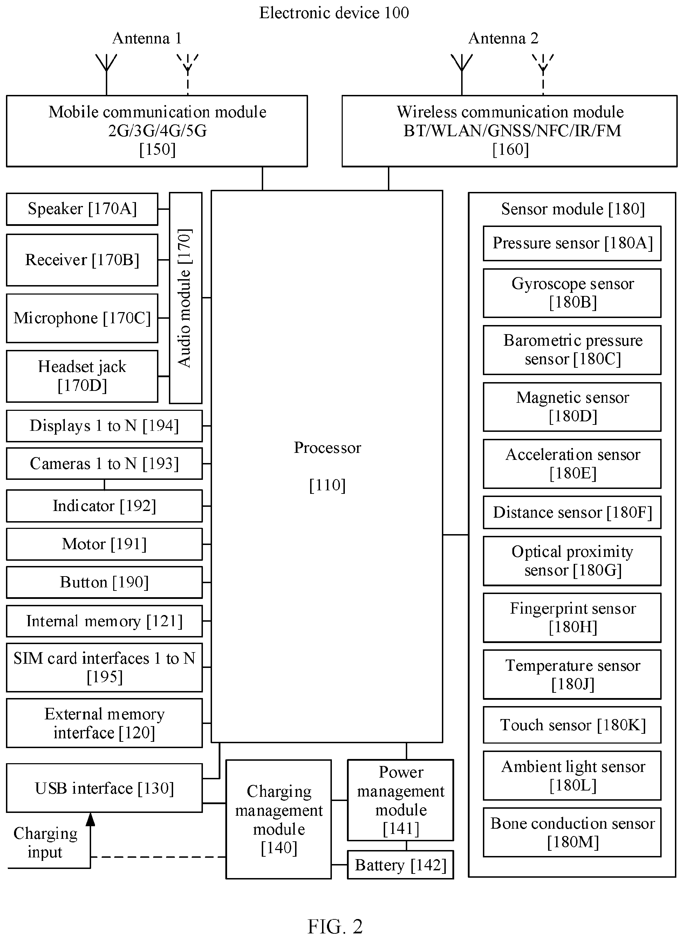

For example, FIG. 2 is a schematic diagram of a structure of a terminal when the terminal is a mobile phone. A mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the mobile phone 100. In other embodiments of this application, the mobile phone 100 may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone 100. The controller may generate an operation control signal based on an instruction operation code and a time sequence signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. In this way, repeated access is avoided, waiting time of the processor 110 is reduced, and system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that complies with a USB standard specification. The USB interface 130 may be configured to connect to a charger to charge the mobile phone 100, or may be configured to transmit data between the mobile phone 100 and a peripheral device. Alternatively, the USB interface 130 may be configured to connect to a headset. For example, a wired headset in this embodiment of this application may be connected to the mobile phone by using the USB interface.

It may be understood that an interface connection relationship between modules illustrated in this embodiment of this application is merely an example for description, and does not constitute a limitation on a structure of the mobile phone 100. In some other embodiments of this application, the mobile phone 100 may alternatively use an interface connection manner different from that in the foregoing embodiment, or a combination of a plurality of interface connection manners.

The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to an internal component.

A wireless communication function of the mobile phone 100 may be implemented by using the antenna 1, the antenna 2, the mobile communication module 150, the wireless communication module 160, the modem processor, the baseband processor, and the like.

The mobile phone 100 may implement an audio function by using the audio module 170, the speaker 170A, the receiver 170B, the microphone 170C, the headset jack 170D, the application processor, and the like. For example, a music playback function and a recording function are implemented.

The audio module 170 is configured to convert digital audio information into an analog audio signal output, and is also configured to convert an analog audio input into a digital audio signal. The audio module 170 may be further configured to: encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The mobile phone 100 may listen to music or answer a hands-free call by using the speaker 170A.

The receiver 170B, also referred to as an "earpiece", is configured to convert an audio electrical signal into a sound signal. When a call is answered or voice information is listened to by using the mobile phone 100, the receiver 170B may be put close to a human ear to listen to a voice.

The microphone 170C, also referred to as a "mike" or a "microphone", is configured to convert a sound signal into an electrical signal. When making a call or sending voice information, a user may place the mouth of the user near the microphone 170C to make a sound, to input a sound signal to the microphone 170C. One or more microphones 170C may be disposed in the mobile phone 100. In some other embodiments, two microphones 170C may be disposed in the mobile phone 100, to collect a sound signal and further implement a noise reduction function. In some other embodiments, three, four, or more microphones 170C may alternatively be disposed in the mobile phone 100, to collect a sound signal, reduce noise, further identify a sound source, implement a directional recording function, and the like.

The headset jack 170D is configured to connect to a wired headset. The headset jack 170D may be a USB interface 130, or may be a 3.5 mm open mobile phone platform (open mobile terminal platform, OMTP) standard interface or cellular telecommunications industry association of the USA (cellular telecommunications industry association of the USA, CTIA) standard interface.

The mobile phone 100 implements a display function by using the GPU, the display 194, the application processor, and the like. The display 194 is configured to display an image, a video, and the like. For example, the display 194 may be configured to display a wireless sound amplification setting interface in this application.

The mobile phone 100 may implement a photographing function by using the ISP, the camera 193, the video codec, the GPU, the display 194, the application processor, and the like.

The external memory interface 120 may be configured to connect to an external storage card, for example, a micro SD card, to extend a storage capability of the mobile phone 100.

The internal memory 121 may be configured to store computer executable program code, where the executable program code includes instructions. The processor 110 runs the instructions stored in the internal memory 121, to perform various function applications and data processing of the mobile phone 100. The internal memory 121 may include a program storage area and a data storage area. The program storage area may store an operating system, an application required by one or more functions (for example, a sound playing function and an image playing function), and the like. The data storage area may store data (such as audio data and a phone book) and the like created during use of the mobile phone 100. In addition, the internal memory 121 may include a high-speed random access memory, and may further include a nonvolatile memory, such as one or more magnetic disk storage devices, a flash memory device, or a universal flash storage (universal flash storage, UFS).

The button 190 includes a power button, a volume button, and the like. The button 190 may be a mechanical button, or may be a touch button. The mobile phone 100 may receive a button input, and generate a button signal input related to user setting and function control of the mobile phone 100.

The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with and separation from the mobile phone 100.

So far, structures and functions of the terminal are described. The following describes in detail the wireless sound amplification method in this application with reference to the accompanying drawings.

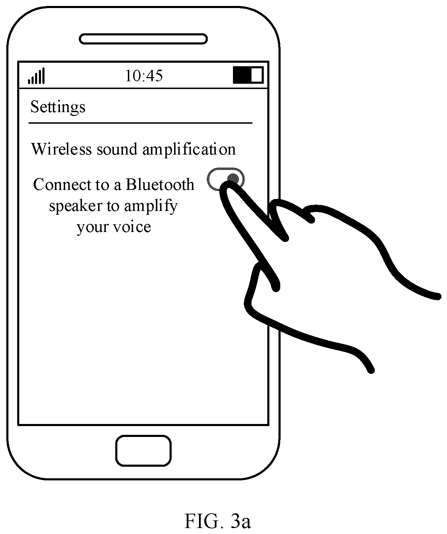

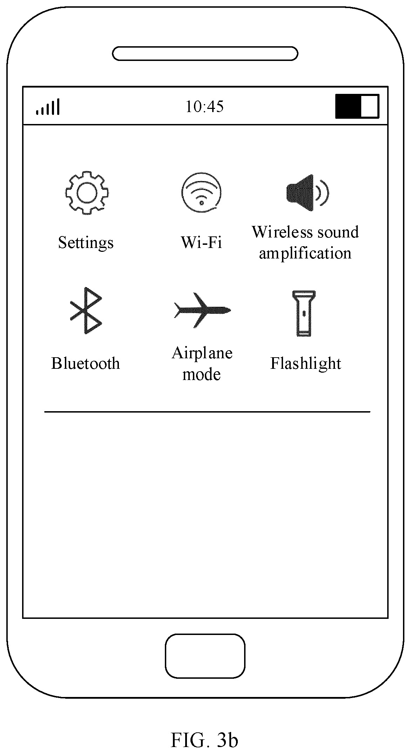

Specifically, in this application, when a user needs to use the terminal to perform sound amplification, the user may enable a wireless sound amplification function of the terminal on a setting interface of the terminal, as shown in FIG. 3a, so that the terminal is enabled to perform the steps performed by the terminal side in embodiments of this application. For example, a functional button of the wireless amplification function may alternatively be in a drop-down interface, as shown in FIG. 3b.

In this application, after the terminal enables the wireless amplification function, the terminal may obtain a voice signal of the user, and process the obtained voice signal of the user by using an audio module of the terminal, for example, the audio module 170 in FIG. 2. Specifically, an audio digital signal processing module in the audio module may be used to process the obtained voice signal. Then, the terminal outputs a processed voice signal. For example, the audio digital signal processing module may be a high-fidelity (High-Fidelity, HIFI) module. In this embodiment of this application, the module is mainly configured to perform sound amplification algorithm processing and audio mixing processing on a signal obtained by the audio module. Specific functions are described in detail in the following embodiment. Optionally, in this application, a device for collecting the voice signal of the user may be a headset microphone, or may be a microphone built in the terminal. Optionally, in this application, the terminal may perform sound amplification on the processed voice signal by using a speaker of the terminal, or may output the processed voice signal to an external device, and perform sound amplification on the voice signal by using the external device. For example, the external device may be an acoustic device, such as a Bluetooth acoustic device or an acoustic device of a television.

The following describes the foregoing solution with reference to a specific application scenario. In a possible implementation, an apparatus for collecting the voice signal of the user may be a microphone in the terminal. After processing the collected voice signal, the terminal performs sound amplification on the processed voice signal by using a speaker of the terminal. For a specific embodiment, refer to Scenario 1.

In another possible implementation, an apparatus for collecting the voice signal of the user may be a microphone in the terminal. After processing the collected voice signal, the terminal may output the processed voice signal to the acoustic device connected to the terminal, and the acoustic device performs sound amplification. For a specific embodiment, refer to Scenario 2.

In still another possible implementation, an apparatus for collecting the voice signal of the user may be a microphone (hereinafter referred to as a headset microphone for short) of a headset connected to the terminal. After obtaining the voice signal that is of the user and that is collected by the headset microphone, the terminal processes the voice signal, and then performs sound amplification on the processed voice signal by using a speaker of the terminal. For a specific embodiment, refer to Scenario 3.

In still another possible implementation, an apparatus for collecting the voice signal of the user may be a microphone of a headset connected to the terminal. After obtaining the voice signal that is of the user and that is collected by the headset microphone, the terminal processes the voice signal, outputs the processed voice signal to the acoustic device connected to the terminal, and then performs sound amplification on the processed voice signal by using a speaker of the terminal. For a specific embodiment, refer to Scenario 4.

Optionally, in this application, an apparatus for collecting the voice signal of the user may be a headset connected to the terminal. The headset may establish a connection to the acoustic device through the terminal, for example, establish a Bluetooth connection. After processing the collected voice signal of the user, the headset may output the processed voice signal to the acoustic device by using the Bluetooth connection to the acoustic device, and perform sound amplification on the processed voice signal by using a speaker of the terminal. For a specific embodiment, refer to Scenario 5.

It should be noted that the "connection" described in this application may be a wired connection. For example, a headset may be connected to a mobile phone by using a headset cable. The "connection" described in this application may alternatively be a wireless connection. For example, a headset is a wireless headset, and may be connected to a mobile phone by using Bluetooth, or a wireless connection may be established between a mobile phone and an acoustic device by using Bluetooth.

### Scenario 1

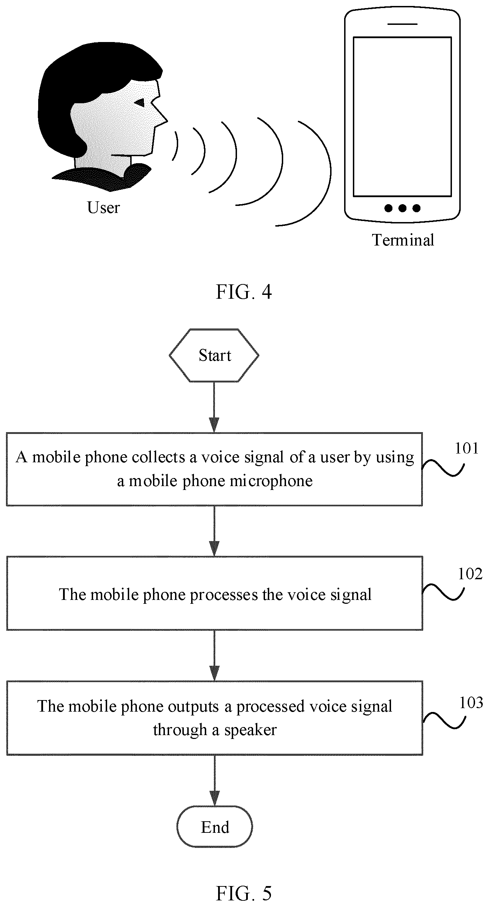

FIG. 4 is an example of a schematic diagram of an application scenario. In FIG. 4, the application scenario includes a mobile phone. In this scenario, a user may speak to the mobile phone, and the mobile phone may collect a voice signal of the user by using a mobile phone microphone, and perform sound amplification on the voice signal. For example, the scenario may be a live broadcast scenario, a speech scenario, or the like. In other words, during a speech, the user may perform sound amplification on a voice by using a mobile phone without carrying a special sound amplification apparatus.

It should be noted that a quantity of mobile phones in FIG. 4, that is, a quantity of terminals described in this application, is merely an example. In actual application, there may be one or more mobile phones. This is not limited in this application. It should be further noted that, in this scenario and the following scenarios, an example in which the terminal is a mobile phone is used for description. In another embodiment, the terminal may alternatively be another device such as a tablet. This is not limited in this application.

With reference to FIG. 4, FIG. 5 is a schematic flowchart of a wireless sound amplification method according to an embodiment of this application. FIG. 5 includes the following steps.

Step 101: The mobile phone collects the voice signal of the user by using the mobile phone microphone.

Specifically, in this embodiment, after the mobile phone enables a wireless sound amplification function, the user may speak to the mobile phone, and specifically, to the microphone in the mobile phone. The mobile phone may collect the voice signal of the user by using the microphone, and the voice signal may alternatively be referred to as a human voice signal.

Step 102: The mobile phone processes the voice signal.

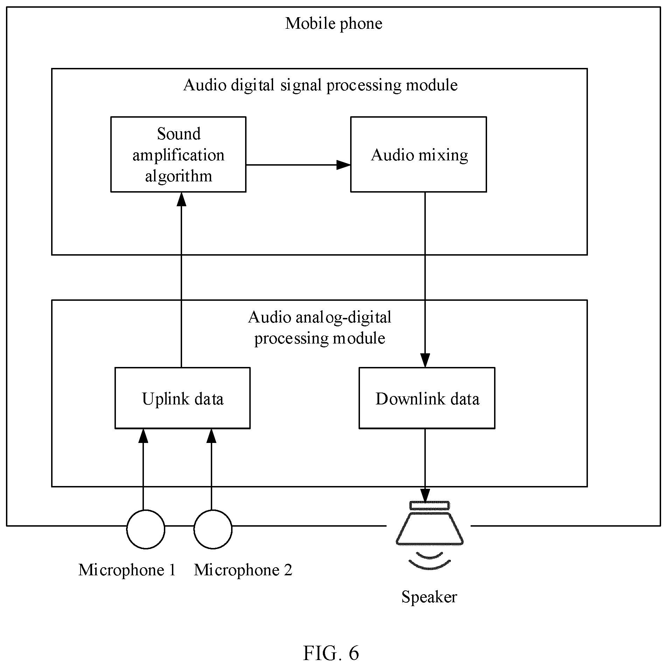

Specifically, FIG. 6 is a schematic flowchart of processing a voice signal by a mobile phone. As shown in FIG. 6, for example, in this embodiment, the mobile phone has two microphones: a microphone 1 and a microphone 2. It should be noted that, in this application, the microphone 1 and the microphone 2 are merely used as an example for description. Actually, there may be two or more microphones in the mobile phone. This is not limited in this application.

Specifically, when the user speaks to the mobile phone, the mobile phone may collect voice signals of the user by using the microphone 1 and the microphone 2. It should be noted that, as shown in FIG. 6, on a mobile phone side, a process in which the mobile phone processes the voice signal of the user may be considered as a loopback process. In the loopback process, the voice signal of the user obtained by the mobile phone from the microphone may be referred to as uplink data for the mobile phone. Correspondingly, after the mobile phone processes the uplink data, that is, the voice signal of the user, a processed voice signal output by the mobile phone may be referred to as downlink data or play data.

The following describes in detail a process in which the uplink data is processed, that is, the loopback process. The process specifically includes:

An audio module of the mobile phone, for example, the audio module 170 in FIG. 2, may include an audio analog-to-digital processing module. The module may perform analog-to-digital conversion on the voice signals of the user collected by the microphone 1 and the microphone 2, that is, convert analog voice signals corresponding to the collected human voice of the user into digital voice signals. Then, the module transmits the digital voice signals to an audio digital signal processing module.

Still as shown in FIG. 6, the audio digital signal processing module may process the digital voice signals based on a preset sound amplification algorithm, and perform audio mixing processing on processed digital voice signals and a playback link to obtain the downlink data. It should be noted that an audio mixing process may be understood as mixing useful information with a carrier, to obtain a signal that carries the useful information. In other words, the audio digital signal processing module performs audio mixing on the useful information, that is, the processed digital voice signals, and the carrier, that is, the playback link, to obtain the downlink data. For example, the playback link may alternatively be referred to as an audio stream, a carrier, or a playback stream. This is not limited in this application.

Specifically, in this application, the processing performed by the audio digital signal processing module on the digital voice signals based on the sound amplification algorithm may include but is not limited to: environmental noise reduction and enhancement processing, anti-howling processing, anti-proximity-effect processing, and sampling rate and bit width conversion processing.

For example, the environmental noise reduction and enhancement processing may be used to reduce a noise signal that enters a microphone, such as wind noise, environmental noise, or another interference signal, and may appropriately enhance a voice signal of a user, to improve definition and a signal-to-noise ratio of a human voice. For the processing process, refer to the current art. Details are not described again in this application.

For example, the sampling rate and bit width conversion processing may be used to convert a voice signal into a sampling rate and a bit width that are compatible with a system, for example, 48 kHz/16 bit. For the processing process, refer to the current art. Details are not described again in this application.

For example, the anti-howling processing may be used to eliminate a howling phenomenon. In this embodiment, the mobile phone may use an adaptive echo cancellation (Acoustic Echo Cancellation, AEC) algorithm in a current technology to cancel howls. In this method, an echo signal ref, which may alternatively be understood as an interference signal, is simulated mainly according to a signal played on a downlink, that is, the downlink data described above. A signal (or sound) collected by a mobile phone microphone includes a useful human voice, that is, a voice signal of a user and an echo signal ref, that is, an interference signal. According to the algorithm, the mobile phone may remove the echo signal ref from the collected signal, to implement echo cancellation. For a specific method, refer to the current art. Details are not described in this application.

For example, the anti-proximity-effect processing may be used to eliminate a proximity effect, and a specific manner is described in detail in Scenario 2.

Step 103: The mobile phone outputs the processed voice signal through a speaker.

Specifically, still as shown in FIG. 6, in this embodiment, the audio digital signal processing module transmits the processed digital voice signal, that is, the downlink data, to the audio analog-to-digital processing module. The audio analog-to-digital processing module performs digital-to-analog conversion, that is, converts the digital voice signal into an analog voice signal. The analog voice signal is played through the speaker of the mobile phone. In this way, sound amplification on the voice signal of the user is implemented. Optionally, the user may adjust a volume of the mobile phone, to adjust a sound amplification effect of the speaker.

### Scenario 2

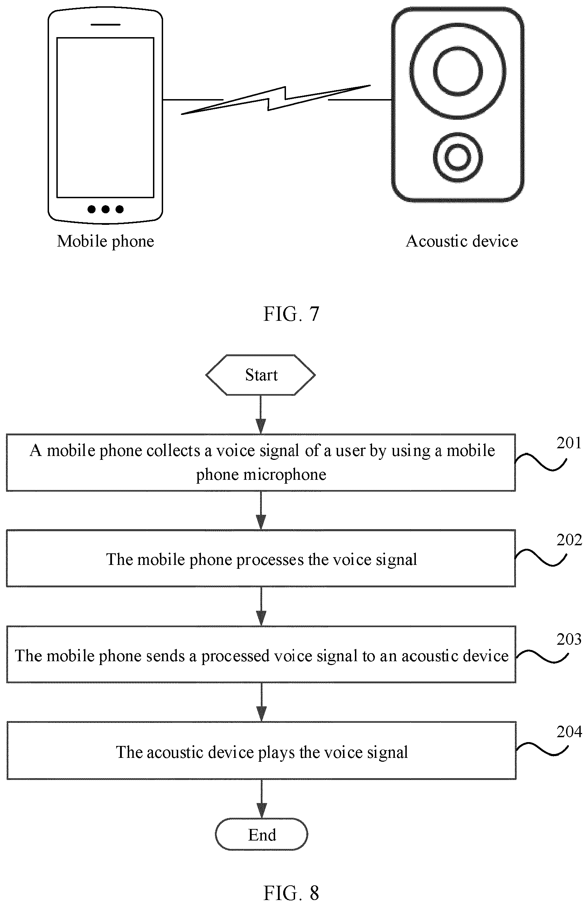

FIG. 7 is a schematic diagram of an application scenario according to an embodiment of this application. As shown in FIG. 7, the application scenario includes a mobile phone and an acoustic device. The mobile phone and the acoustic device establish a communication connection, for example, a Bluetooth connection. In this scenario, a user may speak to the mobile phone, and the mobile phone may collect a voice signal of the user by using a mobile phone microphone, and perform sound amplification on the voice signal by using the acoustic device. For example, the scenario may similarly be a live broadcast scenario, a speech scenario, or the like. To be specific, when making a speech, the user may speak to the mobile phone, and the acoustic device is used to implement sound amplification for a voice.

It should be noted that a quantity of mobile phones and a quantity of acoustic devices in FIG. 7 are merely examples. In actual application, there may be one or more mobile phones and one or more acoustic devices. This is not limited in this application.

With reference to FIG. 7, FIG. 8 is a schematic flowchart of a wireless sound amplification method according to an embodiment of this application. FIG. 8 includes the following steps.

Step 201: The mobile phone collects the voice signal of the user by using the mobile phone microphone.

Specifically, in this embodiment, after the mobile phone enables a wireless sound amplification function, the user may speak to the mobile phone, and specifically, to the microphone in the mobile phone. The mobile phone may collect the voice signal of the user by using the microphone.

Specifically, in this embodiment, after the mobile phone detects that the wireless amplification function is enabled, the mobile phone may establish a connection to a nearby acoustic device. It should be noted that the connection between the mobile phone and the acoustic device refers to a wireless connection. In an example, the mobile phone may establish a Bluetooth connection to the acoustic device. In another example, the mobile phone may establish a Wi-Fi connection to the acoustic device. This is not limited in this application.

For example, in this embodiment, an example in which the mobile phone is connected to the acoustic device by using Bluetooth is used for description. Specifically, after the mobile phone establishes the Bluetooth connection to the acoustic device, the mobile phone may set a Bluetooth mode of the mobile phone to a synchronous connection oriented (Synchronous Connection Oriented, SCO) mode. This mode is used for synchronous voice transmission, and has a feature of low transmission delay.

Step 202: The mobile phone processes the voice signal.

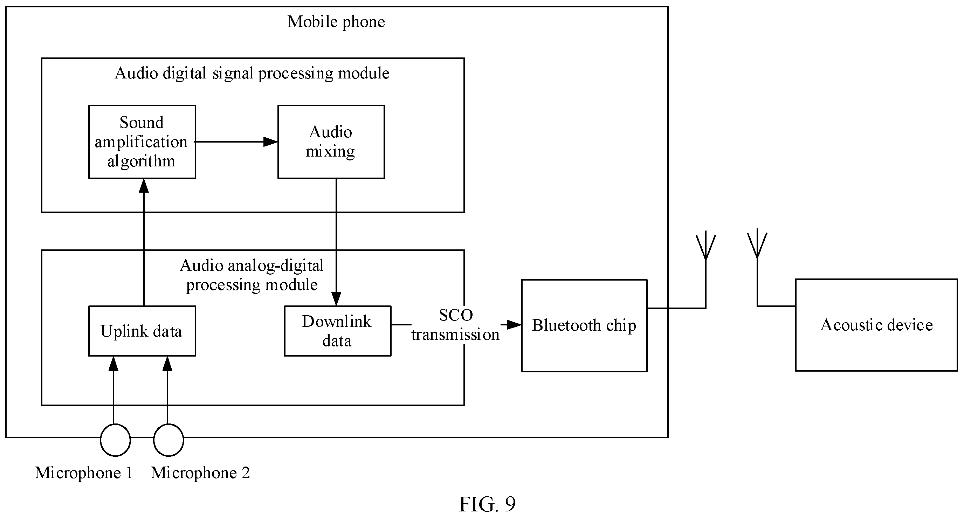

Specifically, FIG. 9 is a schematic flowchart of processing a voice signal by a mobile phone. As shown in FIG. 9, for example, in this embodiment, the mobile phone has two microphones: a microphone 1 and a microphone 2.

Specifically, the mobile phone collects voice signals of the user by using the microphone 1 and the microphone 2, and processes the voice signals of the user, that is, uplink data (for a concept, refer to the foregoing description) in FIG. 9, by using an audio digital signal processing module, to obtain downlink data.

Still as shown in FIG. 9, specifically, the audio digital signal processing module may process the digital voice signal based on a preset sound amplification algorithm, and perform audio mixing on a processed digital voice signal and a playback link to obtain the downlink data.

For example, in this embodiment, the process in which the audio digital signal processing module processes the uplink data includes but is not limited to: environmental noise reduction and enhancement processing, anti-howling processing, anti-proximity-effect processing, and sampling rate and bit width conversion processing.

Optionally, in this embodiment, the audio digital signal processing module may perform anti-howling processing on the uplink data based on the anti-howling algorithm in this application. A specific algorithm is described in detail below. Optionally, the anti-howling processing performed by the audio digital signal processing module may alternatively use an AEC algorithm in a current technology, to eliminate a howling phenomenon.

For other details, refer to step 102. Details are not described herein again.

Step 203: The mobile phone sends the processed voice signal to the acoustic device.

Specifically, still as shown in FIG. 9, the audio digital signal processing module transmits the processed digital voice signal, that is, the downlink data, to an audio analog digital processing module. The audio analog digital processing module may transmit the digital voice signal to a Bluetooth chip based on a current Bluetooth mode, that is, the SCO mode, to transmit, by using the Bluetooth chip, the digital voice signal to the acoustic device through a Bluetooth channel between the mobile phone and the acoustic device.

Step 204: The acoustic device plays the voice signal.

Specifically, the acoustic device may convert the received digital voice signal into an analog voice signal, and play the analog voice signal, to implement sound amplification for the human voice of the user. Optionally, the user may adjust a volume of the acoustic device, to adjust a sound amplification effect.

The following describes in detail the anti-howling processing and the anti-proximity-effect processing used in this application.

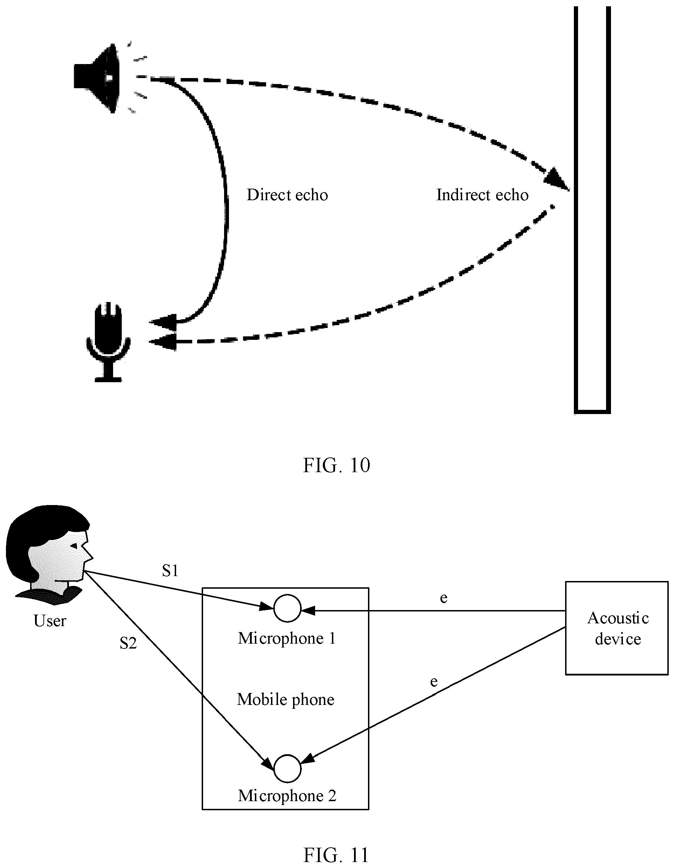

First, to make a person skilled in the art understand an anti-howling processing process, a background technology for anti-howling is briefly introduced first. A root cause of a howling sound is as follows: A sound played by the acoustic device is recollected by the mobile phone microphone and then transmitted to the acoustic device for play. The sound is played repeatedly. In addition, after a direct echo directly transmitted by the acoustic device to the microphone and the sound played by the acoustic device are externally reflected, the direct echo and the sound are transmitted to the microphone, and environment uncertainty information such as reflection is included, as shown in FIG. 10.

As described above, in a current technology, the adaptive echo cancellation (Acoustic Echo Cancellation, AEC) algorithm is generally used to cancel a howling sound. For related concepts, refer to the foregoing description.

For the AEC algorithm, however, the mobile phone needs to accurately estimate an echo signal ref, to accurately suppress the echo signal. However, in a current technology, different acoustic devices refer to acoustic devices produced by different manufacturers, or acoustic devices of different models produced by a same manufacturer. In other words, different acoustic devices have different delays, and different acoustic devices have different playback volumes. As a result, distortion generated when the acoustic devices play is different. Therefore, according to the existing AEC algorithm, echo cancellation can only be performed on a connection device that has a specified delay. For a connection device that does not have a specified delay, due to a limitation of the algorithm, the mobile phone cannot accurately estimate an echo signal ref, and therefore cannot accurately cancel an echo and suppress the howling sound.

To resolve the foregoing problem, this application provides an anti-howling algorithm, and impact of a delay may be ignored. In other words, the anti-howling algorithm in this application may be used for canceling echoes between connection devices having different delays. Specifically, as shown in FIG. 11, an echo fed back by an acoustic device to a microphone end belongs to a far-field sound or is referred to as a far-field signal, and a human voice of a user collected by the microphone, that is, a voice signal of a user, belongs to a near-field sound or is referred to as a near-field signal. If the far-field sound can be canceled, a feedback path may be interrupted, so that a howling phenomenon caused by the far-field sound is suppressed. Because distances from the near-field sound to two microphones of a mobile phone are different, a difference between acoustic intensities collected by the two microphones of the mobile phone is large. For the far-field sound, a size of the mobile phone may be ignored, and signal strengths from the sound to the two microphones of the mobile phone are equivalent. According to this feature, in the anti-howling algorithm in this application, a spectral subtraction method is used to cancel the far-field sound and reserve the near-field sound.

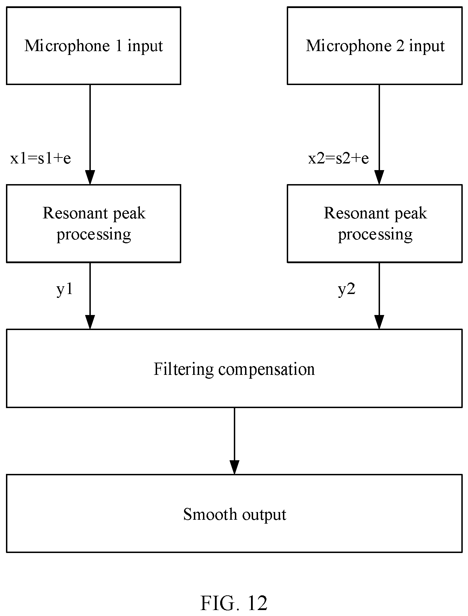

FIG. 12 is a schematic flowchart of an anti-howling algorithm. The algorithm specifically includes the following steps.
(1) Signals collected by the microphone 1 and the microphone 2 each include the voice signal of the user and an interference signal (for concepts, refer to the foregoing description).
(2) Resonant peak processing. Specifically, a near-field human voice is defined according to a difference between the far-field sound and the near-field sound that are collected by the two microphones. In other words, when a signal from the voice signal of the user to the microphone 1 is s1, a signal from the near-field human voice to the microphone 2 is s2, and an interference echo fed back by the acoustic device, that is, the interference signal, is e, the signal collected by the microphone 1 is x1=s1+e, and the signal collected by the microphone 2 is x2=s2+e. The signals collected by the microphone 1 and the microphone 2 are separately input to an equalizer module, and the module is configured to process high-frequency resonance peaks of the signal x1 and the signal x2. Specifically, due to reasons of a microphone component and a pipe, a signal has a resonance peak of more than 15 dB at a high frequency. Therefore, distortion exists between the collected signal and a real signal. After high-frequency resonant peak processing is performed on the signals, a frequency response of the microphone may be smoothed. In other words, distortion caused by a component in the collected signals is removed. The equalizer module outputs processed signals, and the processed signals include a signal y1 obtained after the signal x1 of the microphone 1 is processed, and a signal y2 obtained after the signal x2 of the microphone 2 is processed.
(3) Filtering compensation. Specifically, the equalizer module inputs y1 and y2 to a filtering compensation module, to filter out a signal in y2 from y1, and obtain a human voice, that is, the voice signal of the user. In addition, a near-field human voice damage is compensated for during the filtering process. Specifically, after the signal y2 corresponding to the microphone 2 is subtracted from the signal y1 corresponding to the microphone 1, energy of the obtained voice signal of the user is reduced. Therefore, the voice of the user may be amplified to compensate for the damage.
(4) Smooth output. Specifically, the filtering compensation module inputs the processed signals to a smooth output module, and the module is configured to smooth a volume change caused by the foregoing processing process.

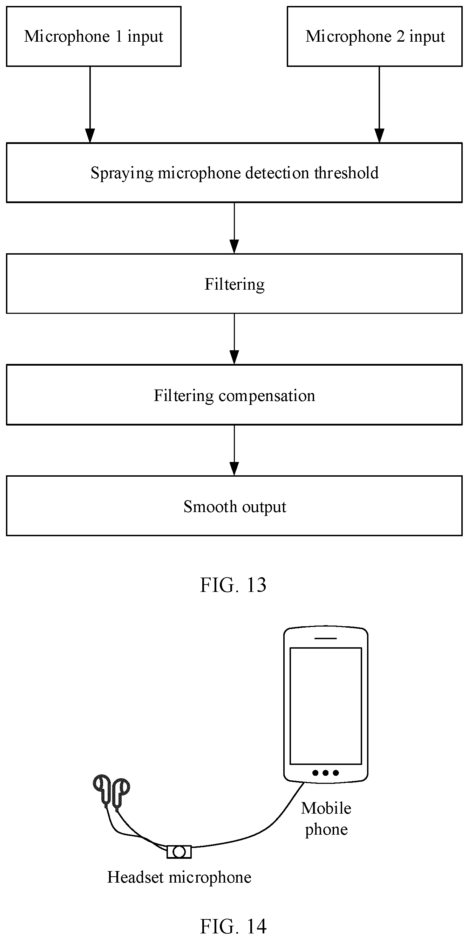

FIG. 13 is a schematic flowchart of an anti-proximity-effect algorithm. The algorithm specifically includes the following steps.
(1) Signals collected by the microphone 1 and the microphone 2 each include a voice signal and an interference signal of the user (for concepts, refer to the foregoing description).
(2) Proximity effect detection threshold. Specifically, a proximity-effect threshold may be preset in a proximity effect detection threshold module. When a signal strength difference between the microphone 1 and the microphone 2 is greater than the proximity-effect threshold, it is determined that a proximity effect exists. On the contrary, when a signal strength difference between the microphone 1 and the microphone 2 is less than the proximity-effect threshold, a proximity effect does not exist. For example, when the proximity effect detection threshold module determines that the proximity effect exists, a subsequent step (3) is performed.
(3) Filtering. Specifically, a filtering module may perform a filtering operation on a primary microphone, for example, the microphone 1, to filter out noise. For example, as described above, the signal obtained by the microphone 1 includes a useful signal, that is, the voice signal of the user, and the interference signal. The signal obtained by the microphone 2 includes the voice signal of the user and an interference signal. The microphone 2 is a secondary microphone, and a distance between the secondary microphone and the user is slightly longer than a distance between the microphone 1 and the user. When the proximity effect occurs, it may be considered that the phenomenon is caused by the interference signal of the primary microphone. Therefore, the interference signal included in the signal obtained by the microphone 2 may be ignored. In other words, the signal obtained by the microphone 2 may be considered as the useful signal, that is, the voice signal of the user. In a filtering process, the signal corresponding to the microphone 2 may be subtracted from the signal corresponding to the primary microphone, that is, the microphone 1, to obtain the interference signal of the microphone 1.
(3) Filtering compensation. A filtering compensation module may perform filtering compensation on a filtered voice signal of the user. Specifically, the filtering compensation module may filter out, based on the interference signal of the microphone 1 obtained in (2), the part of interference signal in the signal corresponding to the microphone 1, to obtain the voice signal of the user. In addition, the filtering compensation module amplifies the voice of the user, to compensate for the damage.
(6) Smooth output. Specifically, the filtering compensation module inputs the processed signals to a smooth output module, and the module is configured to smooth a volume change caused by the foregoing processing process.

### Scenario 3

FIG. 14 is a schematic diagram of an application scenario according to an embodiment of this application. As shown in FIG. 14, the application scenario includes a headset and a mobile phone. The headset establishes a communication connection to the mobile phone device. In an example, when the headset is a wired headset, the headset is connected to the mobile phone by using a headset cable. In another example, when the headset is a wireless headset, for example, a Bluetooth headset, the headset establishes a wireless connection, for example, a Bluetooth connection, to the mobile phone. In this scenario, a user may speak to a headset microphone. The mobile phone may collect a voice signal of the user by using the headset microphone, and perform sound amplification on the voice signal. For example, the scenario may be a live broadcast scenario, a speech scenario, a class scenario, a conference scenario, or the like. For example, in this embodiment, a wired headset is used as an example for description. It should be noted that a quantity of headsets and a quantity of terminals in FIG. 14 are merely examples. In actual application, there may be one or more headsets and one or more mobile phones. This is not limited in this application.

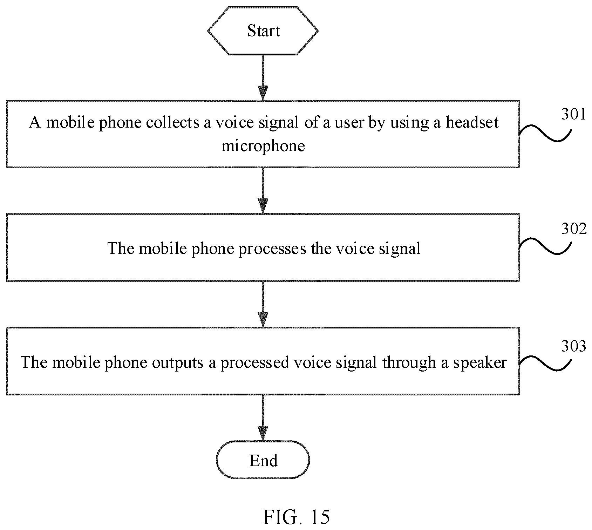

With reference to FIG. 14, FIG. 15 is a schematic flowchart of a wireless sound amplification method according to an embodiment of this application. FIG. 15 includes the following steps.

Step 301: The mobile phone collects the voice signal of the user by using the headset microphone.

Specifically, in this embodiment, after the mobile phone enables a wireless sound amplification function, the user may speak to the microphone of the headset, the headset may collect the voice signal of the user, and the mobile phone obtains the voice signal collected by the headset.

Optionally, when the headset is a wired headset, the headset is connected to the mobile phone by using a headset cable. Optionally, when the headset is a wireless headset, the headset may establish a Bluetooth connection to the mobile phone.

Step 302: The mobile phone processes the voice signal.

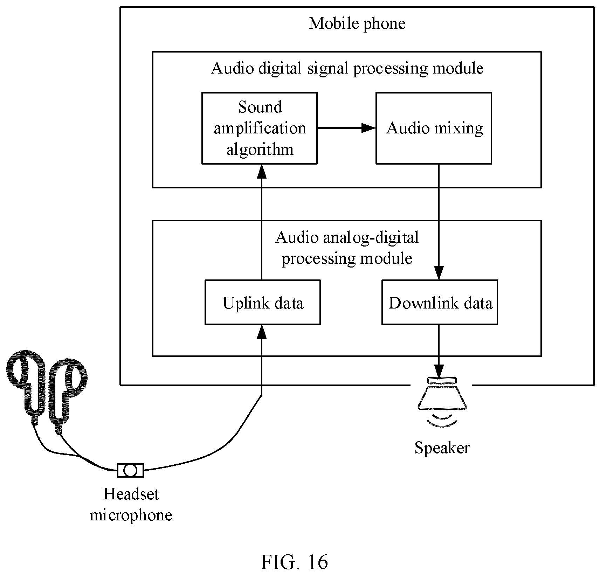

Specifically, FIG. 16 is a schematic flowchart of processing a voice signal by a mobile phone. As shown in FIG. 16, specifically, the mobile phone collects the voice signal of the user by using the headset microphone, and processes the voice signal of the user, that is, uplink data (for a concept, refer to the foregoing description) in FIG. 16, by using an audio digital signal processing module, to obtain downlink data. As shown in FIG. 16, specifically, the audio digital signal processing module may process the digital voice signal based on a preset sound amplification algorithm, and perform audio mixing on a processed digital voice signal and a playback link to obtain the downlink data.

Specifically, in this application, the processing performed by the audio digital signal processing module on the digital voice signal based on the sound amplification algorithm may include but is not limited to: environmental noise reduction and enhancement processing, anti-howling processing, anti-proximity-effect processing, and sampling rate and bit width conversion processing.

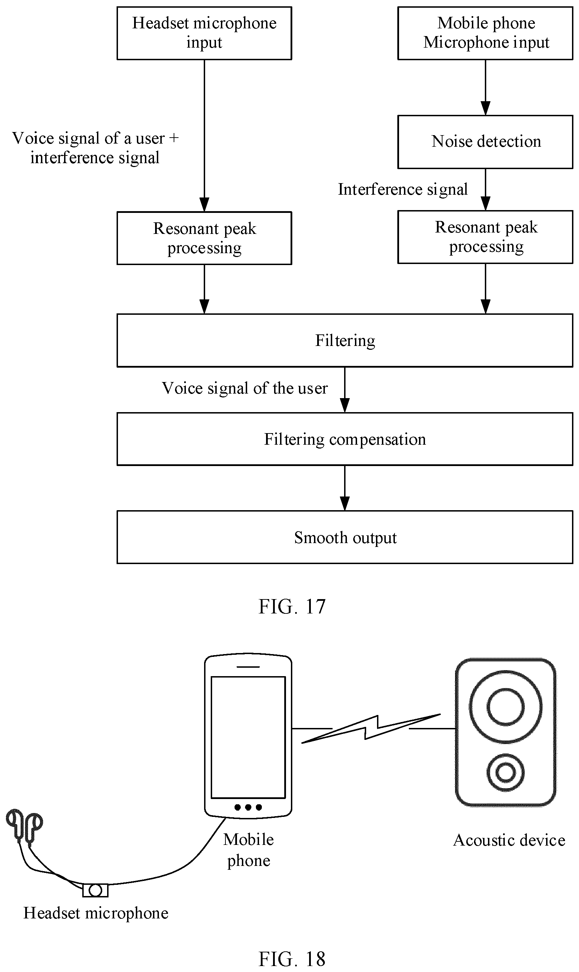

In a possible implementation, the headset includes a microphone. In this embodiment, a mobile phone microphone is in an enabled state. Correspondingly, the mobile phone microphone may collect the voice signal of the user and an interference signal. FIG. 17 is a schematic flowchart of an anti-howling algorithm in this scenario. As shown in FIG. 17, specifically, signals collected by the headset microphone include the voice signal of the user and an interference signal, and signals collected by the mobile phone microphone include the voice signal of the user and an interference signal. In this application scenario, the mobile phone is usually far away from the user. Therefore, the voice signal of the user collected by the mobile phone microphone may be ignored. In other words, in a noise detection process, the signal collected by the mobile phone microphone may be confirmed as the interference signal. Then, resonance peak processing and filtering are performed on the signals that are collected by the headset microphone and that include the voice signal of the user and the interference signal, and the interference signal collected by the mobile phone microphone. For related concepts of the resonance peak processing, refer to the foregoing description. Details are not described herein again. For example, filtering means removing, from the signals collected by the headset microphone, the signal collected by the mobile phone microphone, so that the interference signal can be filtered out, and the voice signal of the user is obtained. Subsequently, filtering compensation processing and smooth output processing may be performed on the obtained voice signal of the user. For specific details, refer to the foregoing description. Details are not described herein again.

In another possible implementation, the headset may include two or more microphones. In this embodiment, the mobile phone microphone may be enabled or disabled. This is not limited in this application. For example, the mobile phone obtains signals collected by a plurality of microphones of the headset. For a process in which the mobile phone performs anti-howling processing on the obtained signals, refer to Scenario 2. Details are not described herein again.

It should be noted that, in this embodiment, the anti-proximity-effect algorithm is similar to the anti-howling algorithm. In an example, the mobile phone may perform anti-proximity-effect processing based on the signals collected by two or more headset microphones. In another example, the mobile phone may perform anti-proximity-effect processing based on the signals collected by the headset microphone and the mobile phone microphone. A specific processing process is the same as that in Scenario 2. Details are not described herein again.

For other details, refer to Scenario 2. Details are not described herein again.

Step 303: The mobile phone outputs the processed voice signal through a speaker.

Specifically, still as shown in FIG. 16, in this embodiment, the audio digital signal processing module transmits the processed digital voice signal, that is, the downlink data, to the audio analog-to-digital processing module. The audio analog-to-digital processing module performs digital-to-analog conversion, that is, converts the digital voice signal into an analog voice signal. The analog voice signal is played through the speaker of the mobile phone. In this way, sound amplification on the voice signal of the user is implemented. Optionally, the user may adjust a volume of the mobile phone, to adjust a sound amplification effect of the speaker.

### Scenario 4

FIG. 18 is a schematic diagram of an application scenario according to an embodiment of this application. As shown in FIG. 18, the application scenario includes a headset, a mobile phone and an acoustic device. The headset, the mobile phone, and the acoustic device establish a communication connection. In an example, when the headset is a wired headset, the headset is connected to the mobile phone by using a headset cable. In another example, when the headset is a wireless headset, for example, a Bluetooth headset, the headset establishes a wireless connection, for example, a Bluetooth connection, to the mobile phone. In addition, the mobile phone may establish a wireless connection, for example, a Bluetooth connection, to the acoustic device.

In this scenario, a user may speak to a headset microphone. The mobile phone may collect a voice signal of the user by using the headset microphone, and perform sound amplification on the voice signal by using the acoustic device. For example, the scenario may be a live broadcast scenario, a speech scenario, a class scenario, a conference scenario, or the like. For example, in this embodiment, a wired headset is used as an example for description. It should be noted that a quantity of headsets, a quantity of mobile phones, and a quantity of acoustic devices in FIG. 18 are merely examples. In actual application, there may be one or more headsets, one or more mobile phones, and one or more acoustic devices. This is not limited in this application.

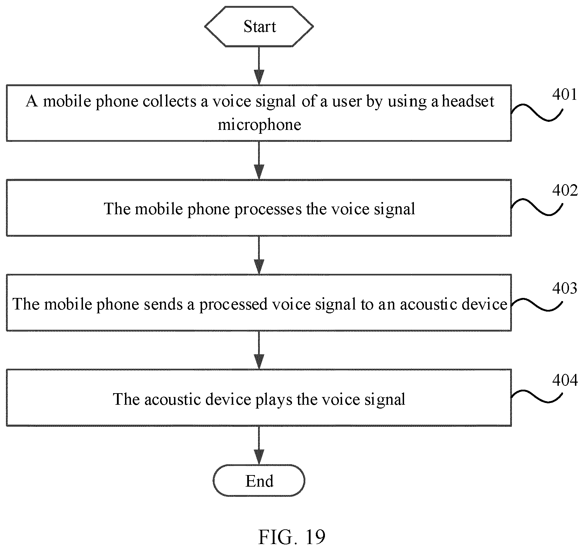

With reference to FIG. 18, FIG. 19 is a schematic flowchart of a wireless sound amplification method according to an embodiment of this application. FIG. 19 includes the following steps.

Step 401: The mobile phone collects the voice signal of the user by using the headset microphone.

Specifically, in this embodiment, after the mobile phone enables a wireless sound amplification function, the user may speak to the microphone of the headset, the headset may collect the voice signal of the user, and the mobile phone obtains the voice signal collected by the headset microphone.

For example, in this embodiment, after the mobile phone detects that the wireless amplification function is enabled, the mobile phone may establish a Bluetooth connection to a nearby acoustic device, and the mobile phone sets a Bluetooth mode to an SCO mode. For other details, refer to step 201. Details are not described herein again.

Step 402: The mobile phone processes the voice signal.

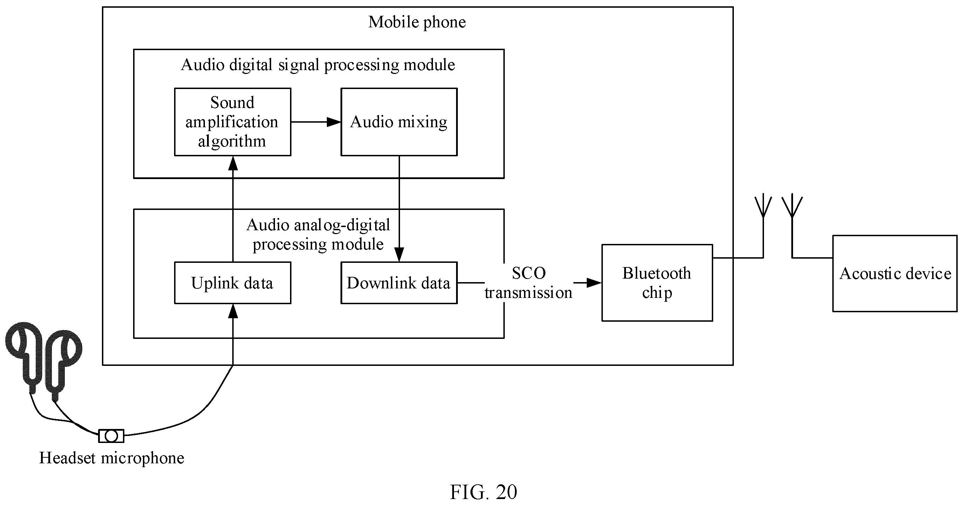

Specifically, FIG. 20 is a schematic flowchart of processing a voice signal by a mobile phone. As shown in FIG. 20, specifically, the mobile phone collects the voice signal of the user by using the headset microphone, and processes the voice signal of the user, that is, uplink data (for a concept, refer to the foregoing description) in FIG. 20, by using an audio digital signal processing module, to obtain downlink data. As shown in FIG. 20, specifically, the audio digital signal processing module may process the digital voice signal based on a preset sound amplification algorithm, and perform audio mixing on a processed digital voice signal and a playback link to obtain the downlink data.

For other details, refer to step 302. Details are not described herein again.

Step 403: The mobile phone sends the processed voice signal to the acoustic device.

Specifically, still as shown in FIG. 20, the audio digital signal processing module transmits the processed digital voice signal, that is, the downlink data, to an audio analog digital processing module. The audio analog digital processing module may transmit the digital voice signal to a Bluetooth chip based on a current Bluetooth mode, that is, the SCO mode, to transmit, by using the Bluetooth chip, the digital voice signal to the acoustic device through a Bluetooth channel between the mobile phone and the acoustic device.

Step 404: The acoustic device plays the voice signal.

Specifically, the acoustic device may convert the received digital voice signal into an analog voice signal, and play the analog voice signal, to implement sound amplification for the human voice of the user. Optionally, the user may adjust a volume of the acoustic device, to adjust a sound amplification effect.

### Scenario 5

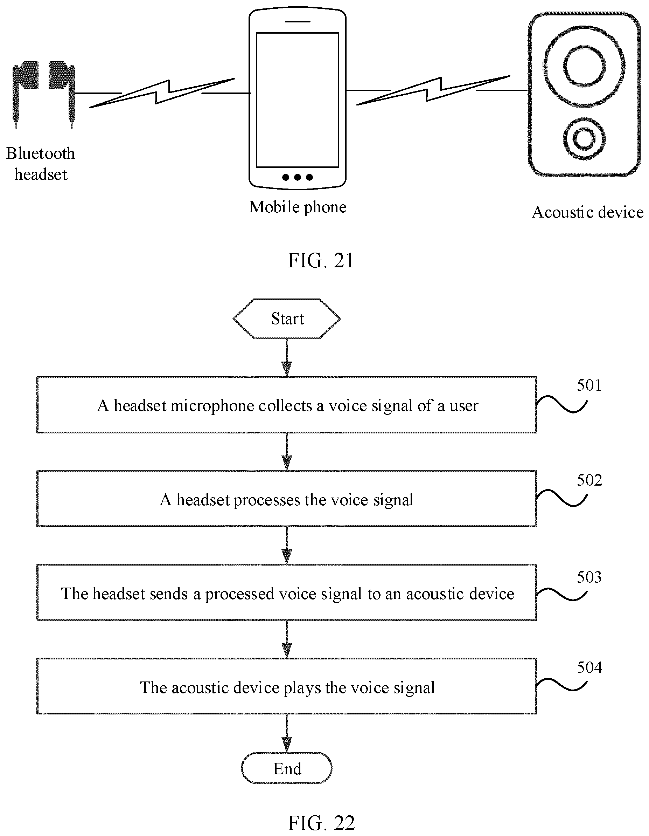

FIG. 21 is a schematic diagram of an application scenario according to an embodiment of this application. As shown in FIG. 21, the application scenario includes a headset, a mobile phone, and an acoustic device. The headset establishes a communication connection to the mobile phone device. For example, the headset in this embodiment is a wireless headset, for example, a Bluetooth headset. The headset may establish a wireless connection, for example, a Bluetooth connection, to the mobile phone. In this scenario, a user may speak to a headset microphone, and the headset may transmit a collected voice signal to the acoustic device, to perform sound amplification on the voice signal by using the acoustic device. For example, the scenario may be a live broadcast scenario, a speech scenario, a class scenario, a conference scenario, or the like. It should be noted that a quantity of headsets, a quantity of mobile phones, and a quantity of acoustic devices in FIG. 21 are merely examples. In actual application, there may be one or more headsets, one or more mobile phones, and one or more acoustic devices. This is not limited in this application.

With reference to FIG. 21, FIG. 22 is a schematic flowchart of a wireless sound amplification method according to an embodiment of this application. FIG. 22 includes the following steps.

Step 501: The headset microphone collects the voice signal of the user.

For example, in this embodiment, the mobile phone may establish a Bluetooth connection to a Bluetooth headset. Specifically, in this embodiment, after the mobile phone enables a wireless sound amplification function, the user may speak to a microphone of the Bluetooth headset, and the Bluetooth headset may collect the voice signal of the user.

For example, in this embodiment, after the mobile phone detects that the wireless amplification function is enabled, the mobile phone may establish a Bluetooth connection to a nearby acoustic device. It may alternatively be understood as the following: The Bluetooth headset establishes a Bluetooth connection to the acoustic device by using the mobile phone. In other words, the Bluetooth headset may be connected to the acoustic device by using the Bluetooth, or the Bluetooth may be referred to as a Bluetooth channel, to transmit data.

Step 502: The headset processes the voice signal.

Specifically, in this embodiment, the Bluetooth headset may be configured with the audio digital signal processing module and the audio analog digital processing module that are of the mobile phone end in the foregoing embodiment, and implement various functions of the audio digital signal processing module and the audio analog digital processing module that are of the mobile phone end.

For example, after obtaining the voice signal of the user, the Bluetooth headset may process the digital voice signal based on a preset sound amplification algorithm, and perform audio mixing on a processed digital voice signal and a playback link to obtain downlink data. A process in which the Bluetooth headset processes the voice signal is the same as the internal processing process of the mobile phone in the foregoing embodiment. Details are not described herein again.

Step 503: The headset sends the processed voice signal to the acoustic device.

For example, in this embodiment, the headset may transmit, by using a Bluetooth chip, the processed voice signal to the acoustic device through the Bluetooth channel between the headset and the acoustic device.

Specifically, in a current technology, a left-ear and right-ear transmission protocol is set for a Bluetooth headset. The protocol specifies that a primary earbud, for example, a right earbud of the headset, transmits sound to a secondary earbud, for example, a left earbud of the headset, to implement audio playback on both earbuds. For specific protocol content, refer to the current art. Details are not described in this application. In this embodiment, the Bluetooth headset may use acoustic Bluetooth as a secondary earbud based on the left-ear and right-ear protocol, and transmit the obtained downlink data, that is, the digital voice signal, to the acoustic device.

Step 504: The acoustic device plays the voice signal.

Specifically, the acoustic device may convert the received digital voice signal into an analog voice signal, and play the analog voice signal, to implement sound amplification for the human voice of the user. Optionally, the user may adjust a volume of the acoustic device, to adjust a sound amplification effect.

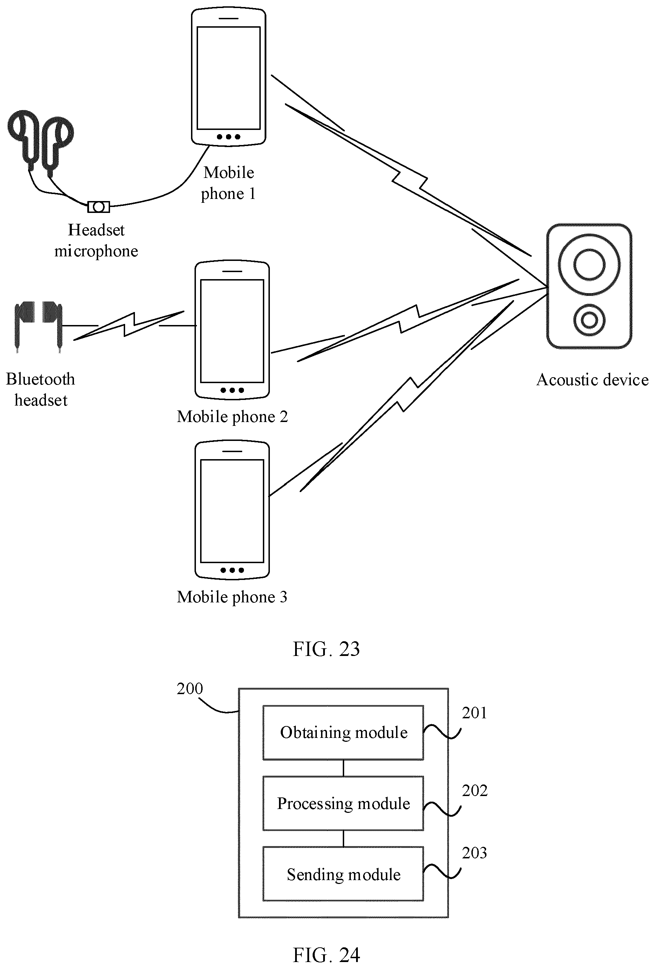

In a possible implementation, as described above, there may be one or more devices in each application scenario. In an example, FIG. 23 is a schematic diagram of a multi-device application scenario. As shown in FIG. 23, a mobile phone 1 and a wired headset, a mobile phone 2 and a Bluetooth headset, a mobile phone 3, and an acoustic device are included. It should be noted that a quantity of mobile phones, a quantity of headsets, and a quantity of acoustic devices are merely examples. This is not limited in this application. Specifically, in this scenario, the mobile phone 1, the mobile phone 2, and the mobile phone 3 may establish a wireless connection to the acoustic device through a wireless network, to transmit data. Specifically, after obtaining the voice signal of the user by using a headset microphone and/or a mobile phone microphone, the mobile phone 1, the mobile phone 2, and/or the mobile phone 3 may process the voice signal of the user, and send a processed voice signal to the acoustic device, to perform sound amplification on the voice signal of the user by using the acoustic device, so that sound amplification is performed on voices of a plurality of users in a conference application scenario or an activity application scenario.

The foregoing mainly describes the solutions provided in embodiments of this application from a perspective of interaction between network elements. It may be understood that, to implement the foregoing functions, the terminal includes corresponding hardware structures and/or software modules for performing the functions. A person skilled in the art should be easily aware that, with reference to the units and algorithm steps in the examples described in embodiments disclosed in this specification, embodiments of this application can be implemented by hardware or a combination of hardware and computer software. Whether a function is performed by hardware or hardware driven by computer software depends on a particular application and a design constraint condition that are of the technical solutions.

In embodiments of this application, the terminal may be divided into function modules based on the foregoing method examples. For example, each function module may be obtained through division for each corresponding function, or two or more functions may be integrated into one processing module. The integrated module may be implemented in a form of hardware, or may be implemented in a form of a software function module. It should be noted that, in embodiments of this application, module division is an example, and is merely logical function division. In an actual implementation, another division manner may be used.

FIG. 24 is a schematic diagram of a structure of a terminal 200. As shown in FIG. 24, the terminal 200 includes an obtaining module 201, a processing module 202, and a sending module 203. Specifically, the obtaining module 201 is configured to obtain a first voice signal collected by a first microphone of the terminal and a second voice signal collected by a second microphone. The processing module 202 is configured to process the first voice signal and the second voice signal in response to the obtained first voice signal and the obtained second voice signal, to obtain a playback voice signal. The sending module 203 is configured to transmit the playback voice signal to a sound amplification device, where the sound amplification device is an external device wirelessly connected to the terminal.

Based on the foregoing technical solutions, the processing module 202 is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; transmit the first digital voice signal and the second digital voice signal to the audio digital signal processing module, where the first voice signal and the second voice signal are analog signals; perform sound effect processing on the first digital voice signal and the second digital voice signal based on a preset sound amplification algorithm, to obtain a third digital voice signal; and perform audio mixing processing on the third digital voice signal to obtain the playback voice signal.

Based on the foregoing technical solutions, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

Based on the foregoing technical solutions, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

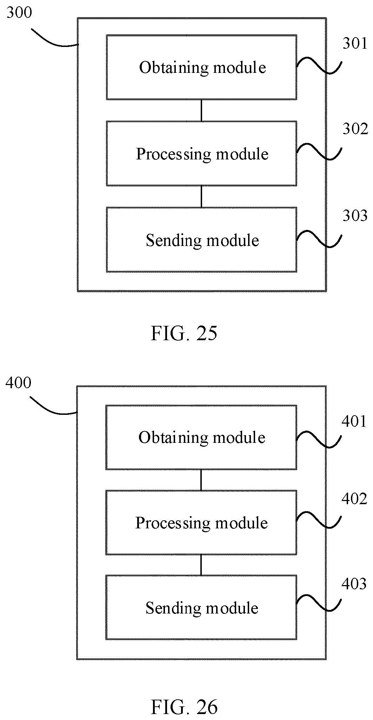

FIG. 25 is a schematic diagram of a structure of a terminal 300. As shown in FIG. 25, the terminal 300 includes an obtaining module 301, a processing module 302, and a speaker module 303. Specifically, the obtaining module 301 is configured to obtain a first voice signal collected by a first microphone of a headset and a second voice signal collected by a second microphone of the headset, where the headset is wiredly or wirelessly connected to the terminal. The processing module 302 is configured to process the first voice signal and the second voice signal in response to the obtained first voice signal and the obtained second voice signal, to obtain a playback voice signal. The speaker module 303 is configured to perform sound amplification on the playback voice signal.

Based on the foregoing technical solutions, the processing module 302 is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal, where the first voice signal and the second voice signal are analog signals; perform sound effect processing on the first digital voice signal and the second digital voice signal based on a preset sound amplification algorithm, to obtain a third digital voice signal; perform audio mixing processing on the third digital voice signal to obtain a fourth digital voice signal; and perform analog-to-digital conversion on the fourth digital voice signal to obtain the playback voice signal.

Based on the foregoing technical solutions, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

Based on the foregoing technical solutions, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

FIG. 26 is a schematic diagram of a structure of a terminal 400. As shown in FIG. 26, the terminal 400 includes an obtaining module 401, a processing module 402, and a sending module 403. Specifically, the obtaining module 401 is configured to obtain a first voice signal collected by a first microphone of a headset and a second voice signal collected by a second microphone of the headset, where the headset is wiredly or wirelessly connected to the terminal. The processing module 402 is configured to process the first voice signal and the second voice signal in response to the obtained first voice signal and the obtained second voice signal, to obtain a playback voice signal. The sending module 403 is configured to transmit the playback voice signal to a sound amplification device, where the sound amplification device is an external device wirelessly connected to the terminal.

Based on the foregoing technical solutions, the processing module 402 is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; transmit the first digital voice signal and the second digital voice signal to the audio digital signal processing module, where the first voice signal and the second voice signal are analog signals; perform sound effect processing on the first digital voice signal and the second digital voice signal based on a preset sound amplification algorithm, to obtain a third digital voice signal; and perform audio mixing processing on the third digital voice signal to obtain the playback voice signal.

Based on the foregoing technical solutions, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

Based on the foregoing technical solutions, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

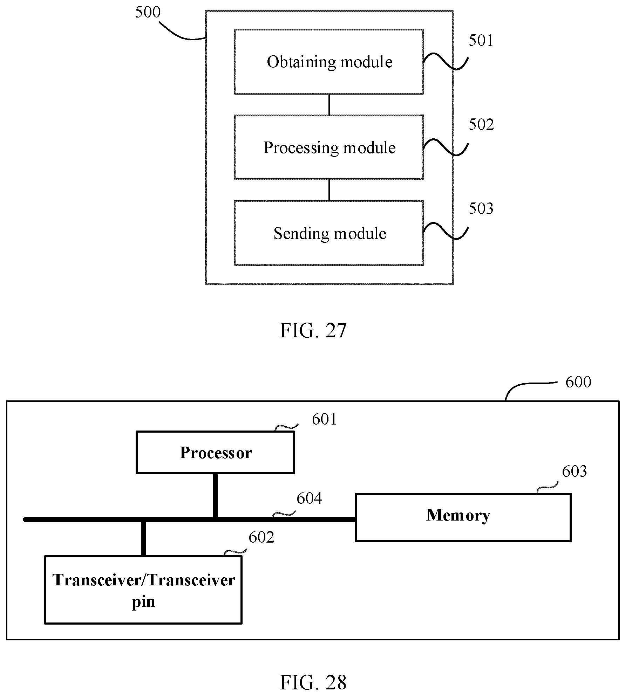

FIG. 27 is a schematic diagram of a terminal 500. As shown in FIG. 27, the terminal 500 includes an obtaining module 501, a processing module 502, and a sending module 503. Specifically, the obtaining module 501 is configured to collect a voice signal; the processing module 502 is configured to process the voice signal in response to the obtained voice signal, to obtain a playback voice signal; and the sending module 503 is configured to transmit the playback voice signal to a sound amplification device.

Based on the foregoing technical solutions, the pickup device is a microphone on a headset that is wiredly or wirelessly connected to the terminal, and includes a first microphone and a second microphone.

Based on the foregoing technical solutions, the pickup device is a microphone of the terminal, and includes a first microphone and a second microphone.

Based on the foregoing technical solutions, the voice signal includes a first voice signal and a second voice signal. The obtaining module 501 is configured to: collect the first voice signal by using the first microphone, and collect the second voice signal by using the second microphone. The processing module 502 is configured to: process the first voice signal and the second voice signal in response to the obtained first voice signal and the obtained second voice signal, to obtain the playback voice signal; and transmit the playback voice signal to the sound amplification device.

Based on the foregoing technical solutions, the sound amplification device is a speaker of the terminal, and the processing module 502 is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal, where the first voice signal and the second voice signal are analog signals; perform sound effect processing on the first digital voice signal and the second digital voice signal based on a preset sound amplification algorithm, to obtain a third digital voice signal; perform audio mixing processing on the third digital voice signal to obtain a fourth digital voice signal; and perform analog-to-digital conversion on the fourth digital voice signal to obtain the playback voice signal.

Based on the foregoing technical solutions, the sound amplification device is a sound amplification device wirelessly connected to the terminal, and the processing module 502 is specifically configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; transmit the first digital voice signal and the second digital voice signal to the audio digital signal processing module, where the first voice signal and the second voice signal are analog signals; perform sound effect processing on the first digital voice signal and the second digital voice signal based on a preset sound amplification algorithm, to obtain a third digital voice signal; perform audio mixing processing on the third digital voice signal to obtain the playback voice signal; and transmit the obtained play digital voice signal to the sound amplification device.

Based on the foregoing technical solutions, the first voice signal includes a first human voice signal and an interference signal, the second voice signal includes a second human voice signal and the interference signal, a preset sound amplification algorithm includes an anti-howling algorithm, and the anti-howling algorithm specifically includes: filtering out, from a first digital voice signal corresponding to the first voice signal, a second digital voice signal corresponding to the second voice signal, and amplifying a first digital voice signal obtained after the filtering to obtain a third digital voice signal, where signal strength of the first voice signal is greater than signal strength of the second voice signal.

Based on the foregoing technical solutions, the first voice signal includes a first human voice signal and an interference signal, the second voice signal includes a second human voice signal, a preset sound amplification algorithm includes an anti-proximity-effect algorithm, and the anti-proximity-effect algorithm specifically includes: when a signal strength difference between the first voice signal and the second voice signal is greater than a proximity-effect threshold, determining the interference signal in the first voice signal based on the second human voice signal; and filtering out the interference signal from the first voice signal.

In another example, FIG. 28 is a schematic block diagram of a terminal 600 according to an embodiment of this application. The terminal may include a processor 601 and a transceiver/transceiver pin 602. Optionally, the terminal further includes a memory 603. The processor 601 may be configured to perform the steps performed by the terminal in the methods in the foregoing embodiments, control a receive pin to receive a signal, and control a transmit pin to send a signal.

The components of the terminal 600 are coupled together through a bus 604. In addition to a data bus, the bus system 604 further includes a power bus, a control bus, and a status signal bus. However, for clear description, various types of buses in the figure are marked as the bus system 604.

Optionally, the memory 603 may be configured to store instructions in the foregoing method embodiments.

It should be understood that the terminal 600 according to this embodiment of this application may correspond to the terminal in the methods in the foregoing embodiments, and the foregoing and other management operations and/or functions of the elements in the terminal 600 are separately used to implement corresponding steps of the foregoing methods. For brevity, details are not described herein again.

All related content of the steps in the foregoing method embodiments may be cited in function descriptions of corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by a terminal, to control the terminal to implement the foregoing method embodiments.

Based on a same technical concept, an embodiment of this application further provides a computer program. When the computer program is executed by a terminal, the computer program is used to implement the foregoing method embodiments.

The program may be all or partially stored in a storage medium that is encapsulated with a processor, or may be partially or all stored in a memory that is not encapsulated with a processor.

Based on a same technical concept, an embodiment of this application further provides a processor, and the processor is configured to implement the foregoing method embodiments. The processor may be a chip.

Methods or algorithm steps described with reference to the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a network device. Certainly, the processor and the storage medium may exist in the network device as discrete components.

A person skilled in the art should be aware that in one or more of the foregoing examples, the functions described in embodiments of this application may be implemented by using hardware, software, firmware, or any combination thereof. When the functions are implemented by using software, the functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or special-purpose computer.

The foregoing describes embodiments of this application with reference to the accompanying drawings. However, this application is not limited to the foregoing specific implementations. The foregoing specific implementations are merely examples rather than limitations.

## Claims

1. A wireless sound amplification system, comprising a terminal (100) and a sound amplification device, wherein the terminal (100) is wirelessly connected to the sound amplification device, and the terminal (100) comprises an audio module (170), a first microphone, and a second microphone;
the first microphone is configured to: collect a first voice signal when a user speaks and transmit the first voice signal to the audio module (170);
the second microphone is configured to: collect a second voice signal when the user speaks and transmit the second voice signal to the audio module (170);
the audio module (170) is configured to: process the first voice signal and the second voice signal in response to the obtained first voice signal and the obtained second voice signal, to obtain a playback voice signal; and transmit the playback voice signal to the sound amplification device; and
the sound amplification device is configured to perform sound amplification on the playback voice signal in response to the obtained playback voice signal,
wherein the audio module (170) comprises an audio analog-to-digital processing module and an audio digital signal processing module;
the audio analog-to-digital processing module is configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; and transmit the first digital voice signal and the second digital voice signal to the audio digital signal processing module, wherein the first voice signal and the second voice signal are analog signals;
the audio digital signal processing module is configured to: in response to the obtained first digital voice signal and the obtained second digital voice signal, perform sound effect processing on the first digital voice signal and the second digital voice signal based on a preset sound amplification algorithm, to obtain a third digital voice signal; perform audio mixing processing on the third digital voice signal to obtain the playback voice signal; and transmit the playback voice signal to the audio analog-to-digital processing module; and
the audio analog-to-digital processing module is further configured to transmit the obtained playback voice signal to the sound amplification device,
wherein the first voice signal comprises a first human voice signal and an interference signal which is an echo signal, the second voice signal comprises a second human voice signal and the interference signal, the preset sound amplification algorithm comprises an anti-howling algorithm, and the anti-howling algorithm specifically comprises:
filtering out, from a first digital voice signal corresponding to the first voice signal, a second digital voice signal corresponding to the second voice signal, and amplifying a first digital voice signal obtained after the filtering, to obtain the third digital voice signal, wherein distances between the first microphone and the user and between the second microphone and the user are different, and signal strength of the first voice signal is greater than signal strength of the second voice signal.

2. The system according to claim 1, wherein the preset sound amplification algorithm further comprises an anti-proximity-effect algorithm, and the anti-proximity-effect algorithm specifically comprises:
when a signal strength difference between the first voice signal and the second voice signal is greater than a proximity-effect threshold, determining the interference signal in the first voice signal based on the second human voice signal; and
filtering out the interference signal from the first voice signal.

3. A terminal (100), comprising an audio module (170) and a pickup device, wherein
the pickup device is configured to: collect a voice signal and transmit the voice signal to the audio module (170); and
the audio module (170) is configured to: process the voice signal in response to the obtained voice signal, to obtain a playback voice signal; and transmit the playback voice signal to a sound amplification device,
wherein the pickup device is a microphone of the terminal (100), and comprises a first microphone and a second microphone,
wherein the voice signal comprises a first voice signal and a second voice signal;
the first microphone is configured to: collect the first voice signal when a user speaks and transmit the first voice signal to the audio module (170);
the second microphone is configured to: collect the second voice signal when the user speaks and transmit the second voice signal to the audio module (170); and
the audio module (170) is configured to: process the first voice signal and the second voice signal in response to the obtained first voice signal and the obtained second voice signal, to obtain the playback voice signal; and transmit the playback voice signal to the sound amplification device,
wherein the audio module (170) comprises an audio analog-to-digital processing module and an audio digital signal processing module;
the sound amplification device is a sound amplification device wirelessly connected to the terminal (100);
the audio analog-to-digital processing module is configured to: in response to the obtained first voice signal and the obtained second voice signal, perform analog-to-digital conversion on the first voice signal to obtain a first digital voice signal, and perform analog-to-digital conversion on the second voice signal to obtain a second digital voice signal; and transmit the first digital voice signal and the second digital voice signal to the audio digital signal processing module, wherein the first voice signal and the second voice signal are analog signals;
the audio digital signal processing module is configured to: in response to the obtained first digital voice signal and the obtained second digital voice signal, perform sound effect processing on the first digital voice signal and the second digital voice signal based on a preset sound amplification algorithm, to obtain a third digital voice signal; perform audio mixing processing on the third digital voice signal to obtain the playback voice signal; and transmit the playback voice signal to the audio analog-to-digital processing module; and
the audio analog-to-digital processing module is further configured to transmit the obtained playback voice signal to the sound amplification device,
wherein the first voice signal comprises a first human voice signal and an interference signal which is an echo signal, the second voice signal comprises a second human voice signal and the interference signal, the preset sound amplification algorithm comprises an anti-howling algorithm, and the anti-howling algorithm specifically comprises:
filtering out, from the first digital voice signal corresponding to the first voice signal, the second digital voice signal corresponding to the second voice signal, and amplifying a first digital voice signal obtained after the filtering, to obtain the third digital voice signal, wherein distances between the first microphone and the user and between the second microphone and the user are different, and signal strength of the first voice signal is greater than signal strength of the second voice signal.

4. The terminal according to claim 3, wherein the preset sound amplification algorithm further comprises an anti-proximity-effect algorithm, and the anti-proximity-effect algorithm specifically comprises:
when a signal strength difference between the first voice signal and the second voice signal is greater than a proximity-effect threshold, determining the interference signal in the first voice signal based on the second human voice signal; and
filtering out the interference signal from the first voice signal.

## Patentansprüche

1. Drahtloses Schallverstärkersystem, ein Endgerät (100) und eine Schallverstärkervorrichtung umfassend, wobei das Endgerät (100) drahtlos mit der Schallverstärkervorrichtung verbunden ist und das Endgerät (100) ein Audiomodul (170), ein erstes Mikrofon und ein zweites Mikrofon umfasst,
das erste Mikrofon eingerichtet ist, um: ein erstes Sprachsignal zu erfassen, wenn ein Benutzer spricht, und das erste Sprachsignal an das Audiomodul (170) zu übertragen; das zweite Mikrofon eingerichtet ist, um: ein zweites Sprachsignal zu erfassen, wenn der Benutzer spricht, und das zweite Sprachsignal an das Audiomodul (170) zu übertragen;
das Audiomodul (170) eingerichtet ist, um: das erste Sprachsignal und das zweite Sprachsignal als Reaktion auf das erlangte erste Sprachsignal und das erlangte zweite Sprachsignal zu verarbeiten, um ein Wiedergabesprachsignal zu erlangen; und das Wiedergabesprachsignal an die Schallverstärkervorrichtung zu übertragen; und
die Schallverstärkervorrichtung eingerichtet ist, um eine Schallverstärkung an dem Wiedergabesprachsignal als Reaktion auf das erlangte Wiedergabesprachsignal durchzuführen,
wobei das Audiomodul (170) ein Analog/Digital-Audioverarbeitungsmodul und ein Digital-Audiosignalverarbeitungsmodul umfasst;
das Analog/Digital-Audioverarbeitungsmodul eingerichtet ist, um: als Reaktion auf das erlangte erste Sprachsignal und das erlangte zweite Sprachsignal eine Analog/Digital-Wandlung an dem ersten Sprachsignal durchzuführen, um ein erstes digitales Sprachsignal zu erlangen, und eine Analog/Digital-Wandlung an dem zweiten Sprachsignal durchzuführen, um ein zweites digitales Sprachsignal zu erlangen; und das erste digitale Sprachsignal und das zweite digitale Sprachsignal an das Digital-Audiosignalverarbeitungsmodul zu übertragen, wobei das erste Sprachsignal und das zweite Sprachsignal analoge Signale sind;
das Digital-Audiosignalverarbeitungsmodul eingerichtet ist, um: als Reaktion auf das erlangte erste digitale Sprachsignal und das erlangte zweite digitale Sprachsignal eine Schalleffektverarbeitung an dem ersten digitalen Sprachsignal und an dem zweiten digitalen Sprachsignal auf Grundlage eines voreingestellten Schallverstärkeralgorithmus durchzuführen, um ein drittes digitales Sprachsignal zu erlangen; eine Audiomischverarbeitung an dem dritten digitalen Sprachsignal durchzuführen, um das Wiedergabesprachsignal zu erlangen; und das Wiedergabesprachsignal an das Analog/Digital-Audioverarbeitungsmodul zu übertragen; und
das Analog/Digital-Audioverarbeitungsmodul weiterhin eingerichtet ist, um das erlangte Wiedergabesprachsignal an die Schallverstärkervorrichtung zu übertragen, wobei das erste Sprachsignal ein erstes menschliches Sprachsignal und ein Interferenzsignal umfasst, das ein Echosignal ist, das zweite Sprachsignal ein zweites menschliches Sprachsignal und das Interferenzsignal umfasst, der voreingestellte Schallverstärkeralgorithmus einen Anti-Rückkopplungspfeifen-Algorithmus umfasst und der Anti-Rückkopplungspfeifen-Algorithmus insbesondere Folgendes umfasst: Herausfiltern eines zweiten digitalen Sprachsignals, das dem zweiten Sprachsignal entspricht, aus einem ersten digitalen Sprachsignal, das dem ersten Sprachsignal entspricht, und Verstärken eines ersten digitalen Sprachsignals, das nach dem Filtern erlangt wurde, um das dritte digitale Sprachsignal zu erlangen, wobei Abstände zwischen dem ersten Mikrofon und dem Benutzer und zwischen dem zweiten Mikrofon und dem Benutzer verschieden sind und die Signalstärke des ersten Sprachsignals größer ist als die Signalstärke des zweiten Sprachsignals.

2. System nach Anspruch 1, wobei der voreingestellte Schallverstärkeralgorithmus weiterhin einen Anti-Nahbesprechungseffekt-Algorithmus umfasst und der Anti-Nahbesprechungseffekt-Algorithmus insbesondere Folgendes umfasst:
wenn eine Signalstärkedifferenz zwischen dem ersten Sprachsignal und dem zweiten Sprachsignal größer ist als ein Nahbesprechungseffekt-Schwellenwert, Bestimmen des Interferenzsignals in dem ersten Sprachsignal auf Grundlage des zweiten menschlichen Sprachsignals; und
Herausfiltern des Interferenzsignals aus dem ersten Sprachsignal.

3. Endgerät (100), ein Audiomodul (170) und eine Aufnahmevorrichtung umfassend, wobei
die Aufnahmevorrichtung eingerichtet ist, um: ein Sprachsignal zu erfassen und das Sprachsignal an das Audiomodul (170) zu übertragen; und
das Audiomodul (170) eingerichtet ist, um: das Sprachsignal als Reaktion auf das erlangte Sprachsignal zu verarbeiten, um ein Wiedergabesprachsignal zu erlangen; und das Wiedergabesprachsignal an eine Schallverstärkervorrichtung zu übertragen,
wobei die Aufnahmevorrichtung ein Mikrofon des Endgeräts (100) ist und ein erstes Mikrofon und ein zweites Mikrofon umfasst,
wobei das Sprachsignal ein erstes Sprachsignal und ein zweites Sprachsignal umfasst; das erste Mikrofon eingerichtet ist, um: das erste Sprachsignal zu erfassen, wenn ein Benutzer spricht, und das erste Sprachsignal an das Audiomodul (170) zu übertragen;
das zweite Mikrofon eingerichtet ist, um: das zweite Sprachsignal zu erfassen, wenn der Benutzer spricht, und das zweite Sprachsignal an das Audiomodul (170) zu übertragen; und
das Audiomodul (170) eingerichtet ist, um: das erste Sprachsignal und das zweite Sprachsignal als Reaktion auf das erlangte erste Sprachsignal und das erlangte zweite Sprachsignal zu verarbeiten, um das Wiedergabesprachsignal zu erlangen; und das Wiedergabesprachsignal an die Schallverstärkervorrichtung zu übertragen,
wobei das Audiomodul (170) ein Analog/Digital-Audioverarbeitungsmodul und ein Digital-Audiosignalverarbeitungsmodul umfasst;
die Schallverstärkervorrichtung eine Schallverstärkervorrichtung ist, die drahtlos mit dem Endgerät (100) verbunden ist;
das Analog/Digital-Audioverarbeitungsmodul eingerichtet ist, um: als Reaktion auf das erlangte erste Sprachsignal und das erlangte zweite Sprachsignal eine Analog/Digital-Wandlung an dem ersten Sprachsignal durchzuführen, um ein erstes digitales Sprachsignal zu erlangen, und eine Analog/Digital-Wandlung an dem zweiten Sprachsignal durchzuführen, um ein zweites digitales Sprachsignal zu erlangen; und das erste digitale Sprachsignal und das zweite digitale Sprachsignal an das Digital-Audiosignalverarbeitungsmodul zu übertragen, wobei das erste Sprachsignal und das zweite Sprachsignal analoge Signale sind;
das Digital-Audiosignalverarbeitungsmodul eingerichtet ist, um: als Reaktion auf das erlangte erste digitale Sprachsignal und das erlangte zweite digitale Sprachsignal eine Schalleffektverarbeitung an dem ersten digitalen Sprachsignal und an dem zweiten digitalen Sprachsignal auf Grundlage eines voreingestellten Schallverstärkeralgorithmus durchzuführen, um ein drittes digitales Sprachsignal zu erlangen; eine Audiomischverarbeitung an dem dritten digitalen Sprachsignal durchzuführen, um das Wiedergabesprachsignal zu erlangen; und das Wiedergabesprachsignal an das Analog/Digital-Audioverarbeitungsmodul zu übertragen; und
das Analog/Digital-Audioverarbeitungsmodul weiterhin eingerichtet ist, um das erlangte Wiedergabesprachsignal an die Schallverstärkervorrichtung zu übertragen, wobei das erste Sprachsignal ein erstes menschliches Sprachsignal und ein Interferenzsignal umfasst, das ein Echosignal ist, das zweite Sprachsignal ein zweites menschliches Sprachsignal und das Interferenzsignal umfasst, der voreingestellte Schallverstärkeralgorithmus einen Anti-Rückkopplungspfeifen-Algorithmus umfasst und der Anti-Rückkopplungspfeifen-Algorithmus insbesondere Folgendes umfasst: Herausfiltern des zweiten digitalen Sprachsignals, das dem zweiten Sprachsignal entspricht, aus dem ersten digitalen Sprachsignal, das dem ersten Sprachsignal entspricht, und Verstärken eines ersten digitalen Sprachsignals, das nach dem Filtern erlangt wurde, um das dritte digitale Sprachsignal zu erlangen, wobei Abstände zwischen dem ersten Mikrofon und dem Benutzer und zwischen dem zweiten Mikrofon und dem Benutzer verschieden sind und die Signalstärke des ersten Sprachsignals größer ist als die Signalstärke des zweiten Sprachsignals.

4. Endgerät nach Anspruch 3, wobei der voreingestellte Schallverstärkeralgorithmus weiterhin einen Anti-Nahbesprechungseffekt-Algorithmus umfasst und der Anti-Nahbesprechungseffekt-Algorithmus insbesondere Folgendes umfasst:
wenn eine Signalstärkedifferenz zwischen dem ersten Sprachsignal und dem zweiten Sprachsignal größer ist als ein Nahbesprechungseffekt-Schwellenwert, Bestimmen des Interferenzsignals in dem ersten Sprachsignal auf Grundlage des zweiten menschlichen Sprachsignals; und
Herausfiltern des Interferenzsignals aus dem ersten Sprachsignal.

## Revendications

1. Système d'amplification de son sans fil, comportant un terminal (100) et un dispositif d'amplification de son, le terminal (100) étant relié sans fil au dispositif d'amplification de son, et le terminal (100) comportant un module audio (170), un premier microphone et un deuxième microphone ;
le premier microphone étant configuré pour : recueillir un premier signal vocal lorsqu'un utilisateur parle et transmettre le premier signal vocal au module audio (170) ;
le deuxième microphone étant configuré pour : recueillir un deuxième signal vocal lorsque l'utilisateur parle et transmettre le deuxième signal vocal au module audio (170) ;
le module audio (170) étant configuré pour : traiter le premier signal vocal et le deuxième signal vocal en réponse au premier signal vocal obtenu et au deuxième signal vocal obtenu, pour obtenir un signal vocal de reproduction ; et transmettre le signal vocal de reproduction au dispositif d'amplification de son ; et
le dispositif d'amplification de son étant configuré pour effectuer une amplification de son sur le signal vocal de reproduction en réponse au signal vocal de reproduction obtenu,
le module audio (170) comportant un module de traitement analogique-numérique audio et un module de traitement de signal numérique audio ;
le module de traitement analogique-numérique audio étant configuré pour : en réponse au premier signal vocal obtenu et au deuxième signal vocal obtenu, effectuer une conversion analogique-numérique sur le premier signal vocal pour obtenir un premier signal vocal numérique, et effectuer une conversion analogique-numérique sur le deuxième signal vocal pour obtenir un deuxième signal vocal numérique ; et transmettre le premier signal vocal numérique et le deuxième signal vocal numérique au module de traitement de signal numérique audio, le premier signal vocal et le deuxième signal vocal étant des signaux analogiques ;
le module de traitement de signal numérique audio étant configuré pour : en réponse au premier signal vocal numérique obtenu et au deuxième signal vocal numérique obtenu, effectuer un traitement d'effets sonores sur le premier signal vocal numérique et le deuxième signal vocal numérique d'après un algorithme prédéfini d'amplification de son, pour obtenir un troisième signal vocal numérique ; effectuer un traitement de mixage audio sur le troisième signal vocal numérique pour obtenir le signal vocal de reproduction ; et transmettre le signal vocal de reproduction au module de traitement analogique-numérique audio ; et
le module de traitement analogique-numérique audio étant en outre configuré pour transmettre le signal vocal de reproduction obtenu au dispositif d'amplification de son,
le premier signal vocal comportant un premier signal de voix humaine et un signal d'interférence qui est un signal d'écho, le deuxième signal vocal comportant un deuxième signal de voix humaine et le signal d'interférence, l'algorithme prédéfini d'amplification de son comportant un algorithme anti-ululement, et l'algorithme anti-ululement comportant spécifiquement :
l'élimination par filtrage, à partir d'un premier signal vocal numérique correspondant au premier signal vocal, d'un deuxième signal vocal numérique correspondant au deuxième signal vocal, et l'amplification d'un premier signal vocal numérique obtenu après le filtrage, pour obtenir le troisième signal vocal numérique, des distances entre le premier microphone et l'utilisateur et entre le deuxième microphone et l'utilisateur étant différentes, et une intensité de signal du premier signal vocal étant supérieure à une intensité de signal du deuxième signal vocal.

2. Système selon la revendication 1, l'algorithme prédéfini d'amplification de son comportant en outre un algorithme anti-effet de proximité, et l'algorithme anti-effet de proximité comportant spécifiquement :
lorsqu'une différence d'intensité de signal entre le premier signal vocal et le deuxième signal vocal est supérieure à un seuil d'effet de proximité, la détermination du signal d'interférence dans le premier signal vocal d'après le deuxième signal de voix humaine ; et
l'élimination par filtrage du signal d'interférence à partir du premier signal vocal.

3. Terminal (100), comportant un module audio (170) et un dispositif de capture,
le dispositif de capture étant configuré pour : recueillir un signal vocal et transmettre le signal vocal au module audio (170) ; et
le module audio (170) étant configuré pour : traiter le signal vocal en réponse au signal vocal obtenu, pour obtenir un signal vocal de reproduction ; et transmettre le signal vocal de reproduction à un dispositif d'amplification de son,
le dispositif de capture étant un microphone du terminal (100), et comportant un premier microphone et un deuxième microphone,
le signal vocal comportant un premier signal vocal et un deuxième signal vocal ;
le premier microphone étant configuré pour : recueillir le premier signal vocal lorsqu'un utilisateur parle et transmettre le premier signal vocal au module audio (170) ;
le deuxième microphone étant configuré pour : recueillir le deuxième signal vocal lorsque l'utilisateur parle et transmettre le deuxième signal vocal au module audio (170) ; et
le module audio (170) étant configuré pour : traiter le premier signal vocal et le deuxième signal vocal en réponse au premier signal vocal obtenu et au deuxième signal vocal obtenu, pour obtenir le signal vocal de reproduction ; et transmettre le signal vocal de reproduction au dispositif d'amplification de son,
le module audio (170) comportant un module de traitement analogique-numérique audio et un module de traitement de signal numérique audio ;
le dispositif d'amplification de son étant un dispositif d'amplification de son relié sans fil au terminal (100) ;
le module de traitement analogique-numérique audio étant configuré pour : en réponse au premier signal vocal obtenu et au deuxième signal vocal obtenu, effectuer une conversion analogique-numérique sur le premier signal vocal pour obtenir un premier signal vocal numérique, et effectuer une conversion analogique-numérique sur le deuxième signal vocal pour obtenir un deuxième signal vocal numérique ; et transmettre le premier signal vocal numérique et le deuxième signal vocal numérique au module de traitement de signal numérique audio, le premier signal vocal et le deuxième signal vocal étant des signaux analogiques ;
le module de traitement de signal numérique audio étant configuré pour : en réponse au premier signal vocal numérique obtenu et au deuxième signal vocal numérique obtenu, effectuer un traitement d'effets sonores sur le premier signal vocal numérique et le deuxième signal vocal numérique d'après un algorithme prédéfini d'amplification de son, pour obtenir un troisième signal vocal numérique ; effectuer un traitement de mixage audio sur le troisième signal vocal numérique pour obtenir le signal vocal de reproduction ; et transmettre le signal vocal de reproduction au module de traitement analogique-numérique audio ; et
le module de traitement analogique-numérique audio étant en outre configuré pour transmettre le signal vocal de reproduction obtenu au dispositif d'amplification de son,
le premier signal vocal comportant un premier signal de voix humaine et un signal d'interférence qui est un signal d'écho, le deuxième signal vocal comportant un deuxième signal de voix humaine et le signal d'interférence, l'algorithme prédéfini d'amplification de son comportant un algorithme anti-ululement, et l'algorithme anti-ululement comportant spécifiquement :
l'élimination par filtrage, à partir du premier signal vocal numérique correspondant au premier signal vocal, du deuxième signal vocal numérique correspondant au deuxième signal vocal, et l'amplification d'un premier signal vocal numérique obtenu après le filtrage, pour obtenir le troisième signal vocal numérique, des distances entre le premier microphone et l'utilisateur et entre le deuxième microphone et l'utilisateur étant différentes, et une intensité de signal du premier signal vocal étant supérieure à une intensité de signal du deuxième signal vocal.

4. Terminal selon la revendication 3, l'algorithme prédéfini d'amplification de son comportant en outre un algorithme anti-effet de proximité, et l'algorithme anti-effet de proximité comportant spécifiquement :
lorsqu'une différence d'intensité de signal entre le premier signal vocal et le deuxième signal vocal est supérieure à un seuil d'effet de proximité, la détermination du signal d'interférence dans le premier signal vocal d'après le deuxième signal de voix humaine ; et
l'élimination par filtrage du signal d'interférence à partir du premier signal vocal.
